(19) Europäisches Patentamt
European Patent Office
Office européen des brevets

(11) EP 4 043 234 B1

(12) # EUROPEAN PATENT SPECIFICATION

(45) Date of publication and mention of the grant of the patent:
**04.12.2024 Bulletin 2024/49**

(21) Application number: **20877394.5**

(22) Date of filing: **29.09.2020**

(51) International Patent Classification (IPC):
***B60C 1/00*** *(2006.01)* ***B60C 5/00*** *(2006.01)*
***C08L 21/00*** *(2006.01)* ***B60C 11/00*** *(2006.01)*
***B60C 11/03*** *(2006.01)* ***B60C 11/12*** *(2006.01)*
***B60C 11/13*** *(2006.01)* ***C08C 19/22*** *(2006.01)*
***C08C 19/25*** *(2006.01)* ***C08C 19/44*** *(2006.01)*

(52) Cooperative Patent Classification (CPC):
(C-Sets available)
**B60C 11/13; B60C 1/0016; B60C 11/0083; B60C 11/0304; C08C 19/22; C08C 19/25; C08C 19/44;** B60C 2011/0025; B60C 2011/0033; B60C 2011/0344; B60C 2011/0353; B60C 2011/0381; B60C 2011/1209; B60C 2011/1254; B60C 2011/129 (Cont.)

(86) International application number:
**PCT/JP2020/036924**

(87) International publication number:
**WO 2021/075256 (22.04.2021 Gazette 2021/16)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2019 JP 2019188554**

(43) Date of publication of application:
**17.08.2022 Bulletin 2022/33**

(73) Proprietor: **SUMITOMO RUBBER INDUSTRIES, LTD.**
**Kobe-shi,**
**Hyogo 651-0072 (JP)**

(72) Inventors:
- **TSUCHIDA Tsuyoshi**
  **Kobe-shi, Hyogo 651-0072 (JP)**
- **UNNO Yuma**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 125 766**
**EP-A1- 2 716 667**
**CN-A- 105 273 250**
**CN-A- 106 079 128**
**JP-A- 2015 128 990**
**JP-A- 2016 113 051**
**JP-A- 2018 154 749**
**JP-A- 2019 094 007**
**JP-A- 2019 094 007**
**JP-A- 2019 099 062**
**JP-A- 2019 116 574**
**JP-A- 2019 131 756**
**US-A- 5 723 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 043 234 B1

(52) Cooperative Patent Classification (CPC): (Cont.)

C-Sets
**C08F 236/10, C08F 4/48;**
**C08L 9/06, C08L 15/00, C08L 9/00, C08L 25/16, C08L 91/00, C08L 91/06, C08K 5/18, C08K 5/09, C08K 3/22, C08K 3/04, C08K 3/36, C08K 5/548, C08K 3/06, C08K 5/47, C08K 5/31;**
**C08L 9/06, C08L 15/00, C08L 9/00, C08L 91/00, C08L 91/06, C08K 5/18, C08K 5/09, C08K 3/22, C08K 3/04, C08K 3/36, C08K 5/548, C08K 3/06, C08K 5/47, C08K 5/31;**
**C08L 15/00, C08L 9/00, C08L 91/00, C08L 91/06, C08K 5/18, C08K 5/09, C08K 3/22, C08K 3/04, C08K 3/36, C08K 5/548, C08K 3/06, C08K 5/47, C08K 5/31;**
C08F 236/06, C08F 212/08

## Description

### Technical field

The present invention relates to a tire whose orientation when mounted on a vehicle is specified.

### Background Art

There have been proposed various tires whose orientation when mounted on a vehicle is specified (see, for example, Patent Document 1 below).
On the other hand, tires are required to have dry grip performance and wet grip performance, and various improvements have been made conventionally. Patent Document 2 discloses a tire comprising a tread produced using a rubber composition which has a tan δ at 0°C of 1.00, a tan δ at 60°C of 0.23, and a peak height of tan δ of 1.11, the tan δ being measured at a dynamic strain amplitude of 1% at a frequency of 10 Hz.
Patent Document 1: Japanese Patent Application Publication No. 2019-094004
Patent Document 2: EP 2 716 667 A1

### Disclosure of the Invention

### Problems to be solved by the Invention

The inventors have found, as a result of various experiments, a way to improve dry grip performance and wet grip performance of a tire whose orientation when mounted on a vehicle is specified. And a new problem was found such that ride comfort performance during running at low temperatures is impaired.
The present invention has been devised in view of the above problem, and its primary object is to improve the ride comfort performance during running at low temperatures, of a tire whose orientation when mounted on a vehicle is specified, while maintaining dry grip performance and wet grip performance.

### Means for Solving the Problems

The present invention is a tire whose orientation when mounted on a vehicle is specified and which has a tread portion made of an elastomeric compound, wherein

the tread portion comprises a plurality of main grooves extending in a tire circumferential direction,
the plurality of main grooves includes a first main groove located most outboard when mounted on the vehicle,
in the first main groove, a ratio L80/L0 of a groove width L80 at a depth of 80% of a maximum depth to a groove width L0 at the ground contacting face of the tread portion is 0.3 to 0.7,
a maximum depth of the first main groove is 0.30 to 0.60 times a maximum thickness of the tread portion,
with respect to tanδ of the elastomeric compound under a strain condition of a frequency of 10 Hz, 10% initial strain, and 2% dynamic strain, -10 degree C tanδ which is the tanδ at -10 degrees C,

40 degree C tanδ which is the tanδ at 40 degrees C, and
70 degree C tanδ which is the tanδ at 70 degrees C
satisfy the following expressions (1) and (2):

$$-10 \text{ degree C } \tan\delta \leq 0.75 \quad \ldots (1)$$

$$|40 \text{ degree C } \tan\delta - 70 \text{ degree C } \tan\delta| \leq 0.10 \quad \ldots (2),$$

the plurality of main grooves includes a second main groove located most inboard when mounted on the vehicle, and
a rubber thickness at the groove bottom of the second main groove is 0.05 to 0.25 times the maximum thickness of the tread portion.

In the tire of the present invention, it is desirable that the -10 degree C tanδ is not more than 0.60.

In the tire of the present invention, it is desirable that the -10 degree C tanδ is not more than 0.50.

In the tire of the present invention,

the plurality of main grooves includes a second main groove located most inboard when mounted on the vehicle, and a rubber thickness at the groove bottom of the second main groove is 0.05 to 0.25 times the maximum thickness of the tread portion.

In the tire of the present invention, it is desirable that

the tread portion is provided with a plurality of lateral grooves extending in tire axial directions, and at least one of the plurality of lateral grooves has a groove width/groove depth ratio of 0.50 to 0.80.

In the tire of the present invention, it is desirable that

the tread portion comprises a second tread edge which is located inboard of the vehicle when mounted on the vehicle, and a second shoulder land portion which is partitioned as being on the most second tread edge side,

the second shoulder land portion is provided with a plurality of second shoulder lateral grooves, and depths of the second shoulder lateral grooves are 0.70 to 1.00 times a distance in the tire radial direction

from a reference line extending in the tire axial direction through the outer end in the tire radial direction of the tread portion to the second tread edge in a tire meridional cross section.

In the tire of the present invention, it is desirable that

the tread portion is provided with a plurality of sipes, and the total volume of the plurality of sipes is 0.20% to 1.00% of the volume of a tread rubber between the two tread edges.

It is desirable that the tire of the present invention is a passenger car tire.

In the tire of the present invention, it is desirable that the elastomeric compound of the tread portion comprises 70 to 80 parts by weight of styrene-butadiene rubber.

In the tire of the present invention, it is desirable that the elastomeric compound of the tread portion comprises 20 to 30 parts by weight of butadiene rubber.

In the tire of the present invention, it is desirable that the plurality of main grooves includes a third main groove provided on the tire equator.

In the tire of the present invention, it is desirable that

the tread portion comprises a first tread edge which is located outboard of the vehicle when mounted on the vehicle, and a first shoulder land portion including the first tread edge, and the first shoulder land portion is provided with a plurality of first shoulder lateral grooves extending from the first tread edge and terminated within the first shoulder land portion.

In the tire of the present invention, it is desirable that the first shoulder land portion is provided with a plurality of first shoulder sipes extending completely across the first shoulder land portion in the tire axial direction.

In the tire of the present invention, it is desirable that

the tread portion comprises a second tread edge which is located inboard of the vehicle when mounted on the vehicle, and a second shoulder land portion including the second tread edge, and

the second shoulder land portion is provided with a plurality of second shoulder lateral grooves extending completely across the second shoulder land portion in the tire axial direction.

In the tire of the present invention, it is desirable that the second shoulder land portion is provided with a plurality of second shoulder sipes whose both ends are terminated within the second shoulder land portion.

**Effect of the Invention**

As described above, the present inventors have discovered that, when trying to improve the dry grip performance and the wet grip performance at the same time, the riding comfort may be deteriorated during running at low temperatures such as winter.

As a result of various studies, the present inventors have come up with the idea that the above problems can be solved by,

setting the ratio L80/L0 of the groove width L80 at the depth of 80% of the maximum depth and the groove width L0 at the ground containing surface of the tread portion to 0.3 to 0.7, and
setting the depth of the first main groove to 0.30 to 0.60 times the maximum thickness of the tread portion, with respect to the first main groove located most outboard of the vehicle when mounted on the vehicle, and
using, as the elastomeric compound constituting the tread portion, one satisfying the following expressions (1) and (2),

$$-10 \text{ degree C } \tan\delta \leq 0.75 \ldots (1)$$

$$|40 \text{ degree C } \tan\delta - 70 \text{ degree C } \tan\delta| \leq 0.10 \ldots (2),$$

wherein the plurality of main grooves includes a second main groove located most inboard when mounted on the vehicle, and
a rubber thickness at the groove bottom of the second main groove is 0.05 to 0.25 times the maximum thickness of the tread portion.

The mechanism is not clear, but it is assumed that, with the above configuration, the flexibility of the tread portion is improved in an area outboard of the vehicle than the tire equator, and thereby, the dry grip performance, wet grip performance and riding comfort during low-temperature running can be improved at the same time.

**Brief description of the Drawings**

[FIG. 1] A sectional view of a tire of an embodiment of the present invention.
[FIG. 2] A development view of the tread portion of FIG. 1.
[FIG. 3] A cross-sectional view taken along line A-A of FIG. 2.
[FIG. 4] An enlarged view of the first crown land portion and the second crown land portion of FIG. 2.
[FIG. 5] An enlarged view of the first shoulder land portion of FIG. 2.
[FIG. 6] An enlarged view of the second shoulder land portion of FIG. 2.

**Explanation of References**

2 tread portion
2A elastomeric compound
11 first main groove

## Best mode for carrying out the Invention

Hereinafter, an embodiment of the present invention will be described based on the drawings.

In FIG. 1, there is shown a cross-sectional view including the rotation axis, of a tire 1 of the present embodiment under a normal state.

The tire 1 of the present invention has a tread portion 2 made of an elastomeric compound 2A, and an orientation when mounting on a vehicle is specified.

The orientation when mounting on a vehicle is indicated by characters or symbols in a sidewall portion 3, for example.

The tire 1 of the present embodiment is suitably used as, for example, a pneumatic tire for a passenger car.

The tire of the present invention is however, not limited to such mode, and may be used as a pneumatic tire for a heavy load, for example.

The "normal state" is a state in which the tire mounted on a regular rim (not shown) and filled with regular internal pressure is loaded with no load. Hereinafter, unless otherwise specified, dimensions and the like of each part of the tire are values measured in this normal state.

The "regular rim" is a rim specified for each tire in a standard system including standards on which the tire is based, for example, "Standard rim" in JATMA, "Design Rim" in TRA, and "Measuring Rim" in ETRTO.

The "Regular internal pressure" is an air pressure specified for each tire in a standard system including standards on which the tire is based, and is the "maximum air pressure" in JATMA, the maximum value described in the 'TIRE LOAD LIMITS AT VARIOUS COLD INFLATION PRESSURES" table in TRA, and the "INFLATION PRESSURE" in ETRTO.

As shown in FIG. 1, the tire 1 of the present embodiment has a carcass 6.

The carcass 6 is composed of, for example, two carcass plies 6A.

The carcass ply 6A comprises carcass cords and a topping rubber covering the carcass cords.

The carcass cords are arranged at angles of 75 to 90 degree with respect to the tire circumferential direction, for example.

For the carcass cords, for example, organic fiber cords such as nylon, polyester and rayon are preferably used.

A known configuration is applied to the topping rubber.

The carcass ply 6A has a main portion 6a and a turnup portion 6b.

The main portion 6a reaches a bead core 5 of a bead portion 4 from the tread portion 2 through a sidewall portion 3.

The turnup portion 6b continues to the main portion 6a and is folded back around the bead core 5 from the inside to the outside in the tire axial direction and extends outwardly in the tire radial direction.

The tread portion 2 of the present embodiment is provided with, for example, a tread reinforcing layer 7.

The tread reinforcing layer 7 includes, for example, a belt layer 8.

The belt layer 8 comprises, for example, two belt plies 8A and 8B.

Each of the belt plies 8A and 8B is configured to include, for example, belt cords arranged so as to be inclined with respect to the tire circumferential direction.

It is desirable that each of the belt cords is inclined at an angle of 10 to 45 degrees with respect to the tire circumferential direction, for example.

The tread reinforcing layer 7 may include, in addition to the belt layer 8, a band layer in which a band cord is wound at an angle of not more than 5 degrees with respect to the tire circumferential direction (not shown).

The bead portion 4 is provided with the bead core 5 and a bead apex rubber 9. The bead core 5 has a substantially rectangular cross section, for example, by winding a bead wire plural times in the tire circumferential direction.

The bead apex rubber 9 is arranged between the main portion 6a and the turnup portion 6b.

The bead apex rubber 9 is made of hard rubber and extends from the bead core 5 outwardly in the tire radial direction in a tapered manner.

In FIG. 2, a developed view of the tread portion 2 is shown.

As shown in FIG. 2, the tread portion 2 has a first tread edge Te1 located outboard of a vehicle when the tire 1 is mounted on the vehicle, and a second tread edge Te2 located inboard of the vehicle when the tire 1 is mounted on the vehicle.

In the case of a pneumatic tire, the first tread edge Te1 and the second tread edge Te2 are the axially outermost ground contact positions when the tire 1 in a normal state is contacted with a flat surface at a camber angle of 0 degrees and loaded with a regular load.

The "Regular load" is a load specified for each tire in a standard system including standards on which the tire is based, and is the "maximum load capacity" in JATMA, the maximum value described in the "TIRE LOAD LIMITS AT VARIOUS COLD INFLATION PRESSURES" table in TRA, and the "LOAD CAPACITY" in ETRTO.

The tread portion 2 comprises a plurality of main grooves continuously extending in the tire circumferential direction between the first tread edge Te1 and the second tread edge Te2.

The plurality of main grooves includes a first main groove 11 located most outboard of the vehicle when mounted on the vehicle.

The first main groove 11 is provided, for example, between the tire equator C and the first tread edge Te1.

The tread portion 2 of the present embodiment comprises

a second main groove 12 located most inboard of the vehicle when mounted on the vehicle, and
a third main groove 13 between the first main groove 11 and the second main groove 12.

The second main groove 12 is provided between the tire equator C and the second tread edge Te2.

The third main groove 13 is provided on the tire equator C, for example.

The groove width of each main groove is, for example, 5% to 8% of a tread width TW.

The tread width TW is a distance in the tire axial direction from the first tread edge Te1 to the second tread edge Te2 under the normal state.

FIG. 3 shows a sectional view of the first main groove 11 taken along line A-A of FIG. 3.

In the first main groove 11, as shown in FIG. 3, a ratio L80/L0 of the groove width L80 at a depth d3 of 80% of the maximum depth d2 and the groove width L0 at the ground contact surface of the tread portion 2, is 0.3 to 0.7.

Such first main groove 11 exhibits excellent drainage, and as the groove wall is appropriately inclined, the rigidity of the adjacent land portion in the tire axial direction can be maintained.

The maximum depth d2 of the first main groove 11 is 0.30 to 0.60 times the maximum thickness d1 (shown in FIG. 1) of the tread portion 2.

The maximum thickness d1 of the tread portion 2 is the maximum thickness from the ground contact surface of the tread portion 2 to the tire inner cavity surface when measured in a state where each main groove is filled.

In the present embodiment, the maximum thickness d1 of the tread portion 2 is configured on the tire equatorial plane.

In the present invention, with respect to tanδ of the elastomeric compound 2A of the tread portion 2 under a strain condition of 10 Hz and a dynamic strain of 2%, -10 degree C tanδ which is the tanδ at -10 degrees C,

40 degree C tanδ which is the tanδ at 40 degrees C, and
70 degree C tanδ which is the tanδ at 70 degrees C,
satisfy the following expressions (1) and (2)

$$-10 \text{ degree C } \tan\delta \leq 0.75 \quad \ldots (1)$$

$$|40 \text{ degree C } \tan\delta - 70 \text{ degree C } \tan\delta| \leq 0.10 \quad \ldots (2).$$

In this specification, the tanδ means a loss tangent measured under a strain condition of frequency 10 Hz, initial strain 10%, and dynamic strain 2%, according to the provisions of JIS K6394, using a viscoelastic spectrometer ("VESF3" manufactured by Iwamoto Seisakusho).

The present inventors have conducted various studies, and as a result, came up with the idea that, by configuring the first main groove 11 as described above, and employing the elastomeric compound 2A satisfying the above expressions (1) and (2) so as to constitute the tread portion 2, it is possible to solve the problem of improving ride comfort during low-temperature running while maintaining dry grip performance and wet grip performance.

It is presumed that, by setting the tanδ of the elastomeric compound 2A of the tread portion 2 in the above ranges, the dry grip performance and the wet grip performance are maintained in a well-balanced manner although the mechanism is not clear.

Further, it is presumed that, by configuring the first main groove 11 as described above, the flexibility of the tread portion in a region outboard of the vehicle than the tire equator is improved, and thereby the riding comfort during low-temperature running is improved.

In the present invention, it is considered that the dry grip performance, the wet grip performance and the riding comfort during low-temperature running can be improved at the same time owing to combinations of actions and effects of the above configurations.

As shown in FIG. 1, a rubber thickness d4 at the bottom of the second main groove 12 is 0.05 to 0.25 times the maximum thickness d1 of the tread portion. Such second main groove 12 helps to enhance the wet grip performance and riding comfort.

The rubber thickness d4 corresponds to the distance in the depth direction of the second main groove 12 from the groove bottom of the second main groove 12 to the tread reinforcing layer 7.

As shown in FIG. 2, in the tread portion 2, there is formed a plurality of lateral grooves 15 extending in the tire axial direction.

It is desirable that at least one of the plurality of lateral grooves 15 has a groove width/groove depth ratio of 0.50 to 0.80.

In the present embodiment, the groove width/groove depth ratio of each of the lateral grooves is set in the above range.

Such lateral grooves 15 make the rigidity in the tire circumferential direction, of the tread portion 2 within an appropriate range, and helps to improve the dry grip performance and the riding comfort in a well-balanced manner.

Further, in the tread portion 2, there is formed a plurality of sipes 16.

In this specification, "sipe" means an incision having a width of 1.5 mm or less. The total volume of the plurality of sipes formed in the entire tread portion 2 is 0.20% to 1.00% of the volume of the tread rubber between the two tread edges. Such arrangement of the sipes 16 can improve the riding comfort during low-temperature running while maintaining the dry grip performance and the wet grip performance.

The volume of the tread rubber means the volume of the elastomeric compound 2A constituting the tread portion 2 between

a virtual plane extending in parallel with the tire radial direction to the tire inner cavity surface through the first tread edge Te1, and
a virtual plane extending in parallel with the tire radial direction to the tire inner cavity surface through the second tread edge Te2,
excluding the volume of the cords of the carcass 6 and the tread reinforcing layer 7.

The tread portion 2 includes, for example, four land portions partitioned by three main grooves.

The tread portion 2 of the present embodiment includes a first crown land portion 21, a second crown land portion 22, a first shoulder land portion 23, and a second shoulder land portion 24.

The first crown land portion 21 is partitioned between the first main groove 11 and the third main groove 13.

The second crown land portion 22 is partitioned between the second main groove 12 and the third main groove 13.

The first shoulder land portion 23 is disposed on the most first tread edge Te1 side among the four land portions, and is defined between the first tread edge Te1 and the first main groove 11.

The second shoulder land portion 24 is disposed on the most second tread edge Te2 side among the four land portions, and is defined between the second tread edge Te2 and the first main groove 11.

In FIG. 4, there are shown enlarged views of the first crown land portion 21 and the second crown land portion 22.

As shown in FIG. 4, the first crown land portion 21 is provided with only sipes, and is not provided with a lateral groove having a groove width of more than 1.5 mm. Such first crown land portion 21 helps to enhance the dry grip performance.

The first crown land portion 21 of the present embodiment is provided with

a plurality of first crown sipes 26 completely crossing the first crown land portion 21, and
a plurality of second crown sipes 27 extending from the third main groove 13 and terminated within the first crown land portion 21.

The first crown sipes 26 and the second crown sipes 27 are arranged alternately in the tire circumferential direction, for example.

Such sipe arrangement enhances the dry grip performance and the wet grip performance in a well-balanced manner.

The second crown land portion 22 is provided with a crown lateral groove 25, a third crown sipe 28, a fourth crown sipe 29, and a fifth crown sipe 30.

The crown lateral groove 25 extends from the second main groove 12 and is terminated within the second crown land portion 22.

The third crown sipe 28 extends from the terminal end of the crown lateral groove 25 to the third main groove 13.

The fourth crown sipe 29 extends from the second main groove 12 and is terminated within the second crown land portion 22.

The fifth crown sipe 30 extends from the third main groove 13 and is terminated within the second crown land portion 22.

In the present embodiment, due to the arrangement of the grooves and sipes described above, the rigidity of the second crown land portion 22 becomes lower than the rigidity of the first crown land portion 21, and the riding comfort during low-temperature running is improved.

In FIG. 5, there is shown an enlarged view of the first shoulder land portion 23. As shown in FIG. 5, the first shoulder land portion 23 is provided with a plurality of first shoulder lateral grooves 31 and a plurality of first shoulder sipes 32.

The first shoulder lateral grooves 31 extend from the first tread edge Te1 and are terminated within the first shoulder land portion 23, for example.

The first shoulder sipes 32 completely cross the first shoulder land portion 23.

It is desirable that, in a tire meridional cross section, the maximum depth of the first shoulder lateral grooves 31 is 0.70 to 1.00 times the distance d5 (shown in FIG. 1) in the tire radial direction

from a reference line extending in the tire axial direction through the outer end in the tire radial direction of the tread portion 2
to the first tread edge Te1.

Thereby, the rigidity of the land portion near the first tread edge Te1 becomes appropriate.

In FIG. 6, there is shown an enlarged view of the second shoulder land portion 24. As shown in FIG. 6, the second shoulder land portion 24 is provided with a plurality of second shoulder lateral grooves 33 and a plurality of second shoulder sipes 34.

The second shoulder lateral grooves 33 completely cross the second shoulder land portion 24, for example.

The second shoulder sipes 34 are a closed sipe having both ends terminated within the second shoulder land portion 24.

It is desirable that, in a tire meridional cross section, the depth of the second shoulder lateral grooves 33 is 0.70 to 1.00 times the distance d6 (shown in FIG. 1) in the tire radial direction

from the reference line extending in the tire axial direction through the outer end in the tire radial direction of the tread portion 2
to the second tread edge Te2.

Thereby, the rigidity of the land portion near the second tread edge Te2 becomes appropriate, and the dry grip performance, the wet grip performance and the riding comfort during low-temperature running are improved in a well-balanced manner.

The -10 degree C tanδ of the elastomeric compound 2A of the tread portion 2 is preferably not more than 0.60, more preferably not more than 0.50. Thereby, the dry grip performance and the wet grip performance are improved in a well-balanced manner.

The elastomeric compound 2A of the tread portion 2 is composed of, for example, a rubber component and other components.

Hereinafter, the specific composition for the elastomeric compound of the present invention will be described.

However, it must be noted that the elastomeric compound 2A of the present invention is characterized by satisfying the above-mentioned expressions (1) and (2) with respect to the tanδ under the strain condition of 10 Hz and a dynamic strain of 2%, therefore, as far as this physical characteristic is satisfied, the elastomeric compound is not limited to the specific composition described below.

As the rubber component of the elastomeric compound 2A,
isoprene-based rubber, butadiene rubber (BR), styrene-butadiene rubber (SBR), acrylonitrile-butadiene rubber (NBR), chloroprene rubber (CR), butyl rubber (IIR), styrene-isoprene-butadiene copolymer rubber (SIBR) and the like can be listed.

These may be used alone or in combination of two or more types.

When the elastomeric compound 2A of the tread portion 2 comprises isoprene-based rubber, the content (total content) of the isoprene-based rubber in 100% by mass of the rubber component is, for example, not less than 5% by mass and not more than 100% by mass.

As the isoprene-based rubber,

natural rubber (NR), isoprene rubber (IR), reformed NR, modified NR, modified IR and the like
can be listed.

As the NR, it is possible to use, for example, SIR20, RSS#3, TSR20 and the like, which are common in the tire industry.

The IR is not particularly limited, and it is possible to use, for example, IR2200 and the like, which are common in the tire industry.

As the reformed NR,

deproteinized natural rubber (DPNR), high-purity natural rubber (UPNR), and the like,
the modified NR includes epoxidized natural rubber (ENR), hydrogenated natural rubber (HNR), grafted natural rubber, and the like, and
the modified IR includes epoxidized isoprene rubber, hydrogenated isoprene rubber, grafted isoprene rubber, and the like
can be listed.

These may be used alone or in combination of two or more types.
When the elastomeric compound 2A of the tread portion 2 comprises SBR,
the content of the SBR in 100% by mass of the rubber component is, for example, not less than 5% by mass and not more than 100% by mass.
The weight-average molecular weight of the SBR is, for example, not less than 100,000 and not more than 2 million.
The amount of styrene in the SBR is, for example, not less than 5% by mass and not more than 50% by mass.
The amount of vinyl (1,2-bonded butadiene unit amount) of the SBR is, for example, not less than 5% by mass and not more than 70% by mass.
The structure identification of the SBR (measurement of styrene amount and vinyl amount) is performed using a JNM-ECA series device manufactured by JEOL Ltd.
The SBR is not particularly limited, and it is possible use, for example,

emulsion-polymerized styrene-butadiene rubber (E-SBR),
solution-polymerized styrene-butadiene rubber (S-SBR)
and the like.

The SBR may be either a non-modified SBR or a modified SBR.
The modified SBR may be any SBR having a functional group that interacts with a filler such as silica. For example, examples thereof include

terminal-modified SBR in which at least one of terminals of the SBR is modified with a compound (modifying agent) having the above functional group (terminal-modified SBR having the above functional group at the terminal),
main chain-modified SBR having the above-mentioned functional group in the main chain,
main-chain terminal-modified SBR having the above-mentioned functional group at the main chain and the terminal (for example, main-chain terminal-modified SBR having the above-mentioned functional group in the main chain and having at least one of terminals modified with the above modifying agent),
terminal-modified SBR modified (coupled) with a polyfunctional compound having two or more epoxy groups in the molecule and introduced with a hydroxyl group or an epoxy group
and the like.

As the functional group,

an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, an hydroxyl group, an oxy group, an epoxy group, and the like
can be listed.

In addition, these functional groups may have a substituent group.
Further, as the modified SBR, it is possible to use SBR modified with a compound (modifying agent), for example, represented by the following formula.

[ Chemi. 1 ]

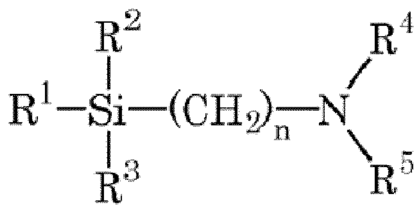

(In the formula, R1, R2 and R3 are the same or different, and represent an alkyl group, an alkoxy group, a silyloxy group, an acetal group, a carboxyl group (-COOH), a mercapto group (-SH) or a derivative thereof.

R4 and R5 are the same or different, and represent a hydrogen atom or an alkyl group.

R4 and R5 may be bonded to form a ring structure together with a nitrogen atom. N represents an integer.)

As the modified SBR modified with the compound (modifying agent) represented by the above formula, it is possible to use

SBR in which the polymerization terminal (active end) of solution-polymerized styrene-butadiene rubber (S-SBR) is modified with the compound represented by the above formula (modified SBR described in Japanese Patent Application Publication No.2010-111753 and the like).

As the R1, R2 and R3, an alkoxy group (preferably an alkoxy group having 1 to 8 carbon atoms, more preferably an alkoxy group having 1 to 4 carbon atoms) is suitable.

As the R4 and R5, an alkyl group (preferably an alkyl group having 1 to 3 carbon atoms) is suitable.

The n is preferably 1 to 5, more preferably 2 to 4, and even more preferably 3. Further, when the R4 and R5 are bonded, together with a nitrogen atom, to form a ring structure, a 4- to 8-membered ring is preferable.

The alkoxy group also includes a cycloalkoxy group (cyclohexyloxy group, and the like) and an aryloxy group (phenoxy group, benzyloxy group, and the like).

Specific examples of the above modifying agent include

2-dimethylaminoethyltrimethoxysilane,
3-dimethylaminopropyltrimethoxysilane,
2-dimethylaminoethyltriethoxysilane,
3-dimethylaminopropyltriethoxysilane,
2-diethylaminoethyltrimethoxysilane,
3-diethylaminopropyltrimethoxysilane,
2-diethylaminoethyltriethoxysilane,
3-diethylaminopropyltriethoxysilane
and the like.

These may be used alone or in combination of two or more types.

Further, as the modified SBR, it is also possible to use
a modified SBR modified with the following compound (modifying agent).

Examples of the modifying agent include:

polyglycidyl ethers of polyhydric alcohols, e.g.
ethylene glycol diglycidyl ether,
glycerin triglycidyl ether,
trimethylolethanetriglycidyl ether,
trimethylolpropane triglycidyl ether
and the like;
polyglycidyl ethers of aromatics having two or more phenolic groups, e.g. diglycidylated bisphenol A
and the like;
polyepoxy compounds, e.g.
1,4-diglycidylbenzene,
1,3,5-triglycidyl benzene,
polyepoxidized liquid polybutadiene
and the like;
epoxy group-containing tertiary amines, e.g.

4,4'-diglycidyl-diphenyl methylamine,
4,4'-diglycidyl-dibenzylmethylamine
and the like;
diglycidylamino compounds, e.g.
diglycidylaniline,
N,N'-diglycidyl-4-glycidyloxyaniline,
diglycidyl orthotoluidine,
tetraglycidylmethoxylenidin,
Tetraglycidylaminodiphenylmethane,
tetraglycidyl-p-phenylenediamine,
diglycidylaminomethylcyclohexane,
tetraglycidyl-1,3-bisaminomethylcyclohexane
and the like;
amino group-containing acid chlorides, e.g.
bis-(1-methylpropyl) carbamate chloride,
4-morpholincarbonyl chloride,
1-pyrrolidincarbonyl chloride,
N,N-dimethylcarbamide acid chloride,
N,N-diethylcarbamide acid chloride
and the like;
epoxy group-containing silane compounds, e.g.
1,3-bis-(glycidyloxypropyl)-tetra methyldisiloxane,
(3-glycidyloxypropyl)-pentamethyldisiloxane
and the like;
sulfide group-containing silane compounds, e.g.
(trimethylsilyl)[3-(trimethoxysilyl) propyl] sulfide,
(trimethylsilyl)[3-(triethoxysilyl) propyl] sulfide,
(trimethylsilyl)[3-(tripropoxysilyl) propyl] sulfide,
(trimethylsilyl)[3-(tributoxysilyl) propyl] sulfide,
(trimethylsilyl)[3-(methyldimethoxysilyl) propyl] sulfide,
(trimethylsilyl)[3-(methyldiethoxysilyl) propyl] sulfide,
(trimethylsilyl)[3-(methyldipropoxysilyl) propyl] sulfide,
(trimethylsilyl)[3-(methyldibutoxysilyl) propyl] sulfide,
and the like;
N-substituted aziridine compounds, e.g.
ethyleneimine,
propyleneimine
and the like;
alkoxysilanes, e.g.
methyltriethoxysilane,
N,N-bis(trimethylsilyl)-3-aminopropyltrimethoxysilane,
N,N-bis(trimethylsilyl)-3-aminopropyltriethoxysilane,
N,N-bis(trimethylsilyl)aminoethyltrimethoxysilane,
N,N-bis(trimethylsilyl)aminoethyltriethoxysilane
and the like;
(thio)benzophenone compounds having an amino group and/or a substituted amino group, e.g.
4-N,N-dimethylaminobenzophenone,
4-N,N-di-t-butylaminobenzophenone,
4-N,N-diphenylamino benzophenone,
4,4'-bis(dimethylamino) benzophenone,
4,4'-bis(diethylamino) benzophenone,
4,4'-bis(diphenylamino) benzophenone,
N,N,N',N'-bis-(tetraethylamino) benzophenone
and the like;
benzaldehyde compounds having an amino group and/or a substituted amino group, e.g.
4-N, N-dimethylaminobenzaldehyde,
4-N, N-diphenylaminobenzaldehyde,
4-N, N-divinylaminobenzaldehyde

and the like;
N-substituted pyroridone N-methyl-2-piperidones, e.g.
N-methyl-2-pyrrolidone,
N-vinyl-2-pyrrolidone,
N-phenyl-2-pyrrolidone,
N-t-butyl-2-pyrrolidone,
N-methyl-5-methyl-2-pyrrolidone
and the like;
N-substituted piperidones, e.g.
N-vinyl-2-piperidone,
N-phenyl-2-piperidone
and the like;
N-substituted lactams, e.g.
N-methyl-ε-caprolactam,
N-phenyl-ε-caprolactam,
N-methyl-ω-laurilolactum,
N-vinyl-ω-laurilolactum,
N-methyl-β-propiolactam,
N-phenyl-β-propiolactam
and the like;
and, in addition,
N,N-bis-(2,3-epoxypropoxy)-aniline,
4,4-methylene-bis-(N,N-glycidylaniline),
tris-(2,3-Epoxypropyl)-1,3,5-triazine-2,4,6-triones,
N,N-diethylacetamide,
N-methylmaleimide,
N,N-diethylurea,
1,3-dimethylethyleneurea,
1,3-divinylethyleneurea,
1 ,3-diethyl- 2-i midazolidi none,
1-methyl-3-ethyl-2-imidazolidinone,
4-N,N-dimethylaminoacetophen,
4-N,N-diethylaminoacetophenone,
1,3-bis(diphenylamino)-2-propanone,
1,7-bis(methi) Lucylamino)-4-heptanone
and the like.

The modifying by the use of the above compound (modifying agent) can be made by a known method.

As the SBR, it is possible to use SBR manufactured and sold by, for example, Sumitomo Chemical Co., Ltd., JSR Corporation, Asahi Kasei Corporation, Zeon Corporation and the like.

The SBR may be used alone or in combination of two or more types.

When the elastomeric compound 2A of the tread portion 2 comprises BR, the content of the BR in 100% by mass of the rubber component is, for example, not less than 5% by mass and not more than 100% by mass.

The weight-average molecular weight of the BR is, for example, not less than 100,000 and not more than 2 million.

The amount of vinyl in the BR is, for example, not less than 1% by mass and not more than 30% by mass.

The cis amount of the BR is, for example, not less than 1% by mass and not more than 98% by mass.

The amount of trance of the BR is, for example, not less than 1% by mass and not more than 60% by mass.

The BR is not particularly limited, and it is possible to use BR having a high cis content, BR having a low cis content, BR containing syndiotactic polybutadiene crystals and the like.

The BR may be either a non-modified BR or a modified BR, and the modified BR includes a modified BR into which the above-mentioned functional group has been introduced.

These may be used alone or in combination of two or more types.

The cis content can be measured by infrared absorption spectrum analysis.

As the BR, it is possible to use products of, for example, UBE Industries, Ltd., JSR Corporation, Asahi Kasei Corporation, Zeon Corporation and the like.

It is preferable that the elastomeric compound 2A of the tread portion 2 comprises carbon black.

The content of the carbon black is, for example, not less than 1 part by mass and not more than 200 parts by

mass with respect to 100 parts by mass of the rubber component.

The carbon black is not particularly limited, and examples thereof include furnace black (furnace carbon black) such as SAF, ISAF, HAF, MAF, FEF, SRF, GPF, APF, FF, CF, SCF and ECF;

acetylene black (acetylene carbon black);
thermal black (thermal carbon black) such as FT and MT;
channel black (channel carbon black) such as EPC, MPC and CC;
graphite
and the like.

These may be used alone or in combination of two or more types.

The nitrogen adsorption specific surface area (N2SA) of the carbon black is, for example, not less than 30 m2/g and not more than 250 m2/g.

The amount of dibutyl phthalate (DBP) absorbed by the carbon black is, for example, not less than 50 ml/100g and not more than 250 ml/100g.

The nitrogen adsorption specific surface area of carbon black is measured according to ASTM D4820-93, and the amount of DBP absorbed is measured according to ASTM D2414-93.

The carbon black is not particularly limited, and examples thereof include N134, N110, N220, N234, N219, N339, N330, N326, N351, N550, N762 and the like.

Products of, for example, Asahi Carbon Co., Ltd., Cabot Japan Corporation, Tokai Carbon Co., Ltd., Mitsubishi Chemical Corporation, Lion Corporation, Shin Nikka Carbon Co., Ltd., Columbia Carbon Co., Ltd. and the like can be used as commercially available products.

These may be used alone or in combination of two or more types.

It is preferable that the elastomeric compound 2A of the tread portion 2 comprises silica.

As the silica, for example, dry silica (anhydrous silica) and wet silica (hydrous silica) can be listed.

Of these, wet silica is preferable because it has a large number of silanol groups.

The content of the silica is, for example, not less than 1 part by mass and not more than 200 parts by mass with respect to 100 parts by mass of the rubber component.

The nitrogen adsorption specific surface area (N2SA) of the silica is, for example, not less than 40 m2/g and not more than 300 m2/g.

The N2SA of the silica is a value measured by the BET method according to ASTM D3037-93.

As the silica, it is possible to use products of, for example, Degussa Co., Ltd., Rhodia, Tosoh Silica Corporation, Solvay Japan, Ltd., Tokuyama Corporation and the like.

It is preferable that the elastomeric compound 2A of the tread portion 2 comprises a silane coupling agent together with the silica.

The silane coupling agent is not particularly limited, and examples thereof include sulfide-based silane coupling agents, e.g.

bis(3-triethoxysilylpropyl)tetrasulfide,
bis(2-triethoxysilylethyl)tetrasulfide,
bis(4-triethoxysilylbutyl)tetrasulfide,
bis(3-trimethoxysilylpropyl)tetrasulfide,
bis(2-trimethoxysilylethyl)tetrasulfide,
bis(2-triethoxysilylethyl)trisulfide,
bis(4-trimethoxysilylbutyl)trisulfide,
bis(3-Triethoxysilylpropyl)disulfide,
bis(2-triethoxysilylethyl)disulfide,
bis(4-triethoxysilylbutyl)disulfide,
bis(3-trimethoxysilylpropyl)disulfide,
bis(2-trimethoxysilylethyl)disulfide,
bis(4-trimethoxysilylbutyl)disulfide,
3-trimethoxysilylpropyl-N,N-dimethylthiocarbamoyltetrasulfide,
2-trietho>cysilylethyl-N,N-dimethylthiocarbamoyltetrasulfide,
3-triethoxysilylpropyl methacrylate monosulfide
and the like,
mercapto-based silane coupling agents, e.g.
3-mercaptopropyltrimethoxysilane,
2-mercaptoethyltriethoxysilane,

NXT, NXT-Z manufactured by Momentive
and the like,
vinyl-based silane coupling agents, e.g.
vinyltriethoxysilane,
vinyltrimethoxysilane,
and the like,
amino-based silane coupling agents, e.g.
3-aminopropyltriethoxysilane,
3-aminopropyltrimethoxysilane,
and the like,
glycydoxy-based silane coupling agents, e.g.
γ-glycidoxypropyltriethoxysilane,
γ-glycidoxypropyltrimethoxysilane
and the like,
nitro-based silane coupling agents, e.g.
3-Nitropropyltrimethoxysilane,
3-Nitropropyltriethoxysilane,
and the like,
chloro-based silane coupling agents, e.g.
3-Chloropropyltrimethoxysilane,
3-Chloropropyltriethoxysilane
and the like.

These may be used alone or in combination of two or more types.

As the silane coupling agent, it is possible to use products of, for example, Degussa Co., Ltd., Momentive Inc., Shin-Etsu Chemical Co., Ltd., Tokyo Chemical Industry Co., Ltd., AZmax Co., Ltd., Toray Dow Corning Co., Ltd. and the like.

The content of the silane coupling agent is, for example, not less than 3 parts by mass and not more than 25 parts by mass with respect to 100 parts by mass of silica.

The elastomeric compound 2A of the tread portion 2 may comprises a polymer component such as a liquid polymer and a solid polymer, other than the rubber component.

The liquid polymer is a polymer which is liquid at room temperature (25 degrees C). The solid polymer is a polymer which is solid at room temperature (25 degrees C).

The liquid polymers and solid polymers include
farnesene-based polymer, liquid diene-based polymer, styrene-based resin, coumarone indene resin, terpene-based resin, p-t-butylphenol acetylene resin, phenol-based resin, c5 resin, c9 resin, c5c9 resin, acrylic resin and the like.

The farnesene-based polymer is a polymer obtained by polymerizing farnesene, and has a structural unit based on farnesene. The farnesene has isomers, e.g. α-farnesene((3E,7E)-3,7,11-trimethyl-1,3,6,10-dodecatetraene), β-farnesene(7,11-dimethyl-3-methylene-1,6,10-dodecatorien) and the like.

The farnesene-based polymer may be

a farnesene homopolymer (farnesene homopolymer), or
a copolymer of farnesene and a vinyl monomer (farnesene-vinyl monomer copolymer).

As the vinyl monomer, the following can be listed:

aromatic vinyl compounds, e.g.
styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinyl xylene, vinyl naphthalene, vinyl toluene, vinyl pyridine, diphenylethylene, diphenylethylene containing a tertiary amino group
and the like,
conjugated diene compounds, e.g.
butadiene, isoprene
and the like.

These may be used alone or in combination of two or more types.

As the farnesene-based polymer, liquid farnesene-based polymer can be used. The liquid farnesene-based polymer is a farnesene-based polymer which is liquid at room temperature (25 degrees C), and

that having a weight-average molecular weight (Mw) of 3,000 to 300,000 can be used.

The glass transition temperature (Tg) of the farnesene-based polymer is, for example, not lower than -100 degrees C and not higher than -10 degrees C.

The Tg is a value measured according to JIS K7121:1987, under the condition of a temperature rise rate of 10 degrees C/min, by the use of a differential scanning calorimeter (Q200) manufactured by TA Instruments Japan.

The melt viscosity of the farnesene-based polymer is, for example, not less than 0.1 Pa·s and not more than 500 Pa·s.

The melt viscosity is a value measured at 38 degrees C using a Brookfield type viscometer (manufactured by BROOKFIELD ENGINEERING LABS.INC.).

In the farnesene-vinyl monomer copolymer, the copolymerization ratio (farnesene/vinyl monomer) of the farnesene and the vinyl monomer based on mass is, for example, 40/60 to 90/10.

The content of the farnesene-based polymer is, for example, not less than 1.0 part by mass and not more than 50.0 parts by mass with respect to 100 parts by mass of the rubber component.

As the farnesene-based polymer, it is possible to use products of, for example, Kuraray Co., Ltd and the like.

As the liquid diene polymer, the following can be listed:

liquid styrene-butadiene polymer (liquid SBR), liquid butadiene polymer (liquid BR), liquid isoprene polymer (liquid IR), liquid styrene isoprene copolymer (liquid SIR) and the like.

The polystyrene-equivalent weight-average molecular weight (Mw) of the liquid diene polymer measured by gel permeation chromatography (GPC) is, for example, $1.0 \times 10^3$ to $2.0 \times 10^5$.

In the present specification, the Mw of the liquid diene polymer is a polystyrene-equivalent value measured by gel permeation chromatography (GPC).

The content of the liquid polymer (total content of the liquid farnesene-based polymer, the liquid diene polymer, and the like) is, for example, not less than 1 part by mass and not more than 100 parts by mass with respect to 100 parts by mass of the rubber component.

The coumarone indene resin is a resin containing coumarone and indene as a monomer component constituting the skeleton (main chain) of the resin. As the monomer component contained in the skeleton other than coumarone and indene, the following can be listed:

styrene, $\alpha$-methylstyrene, methylindene, vinyltoluene and the like.

The content of the coumarone indene resin is, for example, not less than 1.0 part by mass and not more than 50.0 parts by mass with respect to 100 parts by mass of the rubber component.

The hydroxyl value (OH value) of the coumarone indene resin is, for example, not less than 15 mgKOH/g and not more than 150 mgKOH/g.

The OH value is the amount of potassium hydroxide expressed in milligrams required to neutralize acetic acid bonded to a hydroxyl group when acetylating 1 gram of the resin, and the value is measured by the potentiometric titration method (JIS K0070:1992).

The softening point of the coumarone indene resin is, for example, not lower than 30 degrees C and not higher than 160 degrees C.

The softening point is the temperature at which the ball drops when the softening point defined in JIS K62201:2001 is measured by a ring-ball type softening point measuring device.

The styrene-based resin is a polymer using a styrene-based monomer as a constituent monomer, and examples thereof include

a polymer obtained by polymerizing a styrene-based monomer as a main component (not less than 50% by mass).

Specific examples include

homopolymer obtained by polymerizing one kind of styrene-based monomer (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, and the like),

copolymer obtained by copolymerizing two or more kinds of styrene-based

monomers, and

copolymer of styrene-based monomer and other monomer which can be copolymerized with the styrene-based monomer.

As the above-mentioned other monomer, the following can be listed:

acrylonitrile such as acrylonitrile and methacrylate,

acrylic,
unsaturated carboxylic acid such as methacrylic acid,
unsaturated carboxylic acid ester such as methyl acrylate and methyl methacrylate, diene such as chloroprene and butadiene isoprene,
olefin such as 1-butene and 1-pentene; and
α,β-unsaturated carboxylic acid such as maleic anhydride or acid anhydride thereof.

As the terpene-based resin, the following can be listed:
polyterpene, terpene phenol, aromatic-modified terpene resin and the like.
The polyterpene is a resin obtained by polymerizing terpene compound and its hydrogenated product.
The terpene compound is a hydrocarbon whose composition is represented by (C5H8)n and oxygen-containing derivative thereof, and is a compound which has, as its basic skeleton, terpene classified into monoterpene (C10H16), sesquiterpen (C15H24), diterpene (C20H32) or the like, and examples include α-pinene, β-pinene, dipentene, limonene, milsen, aloosimene, ossimen, α-ferandren, α-terpinene, γ-terpinene, terpineol, 1,8-cineol, 1,4-cineol. , α-terpineol, β-terpineol, γ-terpineol and the like.
As the polyterpene, the following can be listed:

terpene resins, e.g. α-pinene resin, β-pinene resin, limonene resin, dipentene resin, β-pinene/limonene resin and the like, made from the above-mentioned terpene compounds, as well as hydrogenated terpene resins made by adding
hydrogenation to the above-mentioned terpene resins.

As the terpene phenol, the following can be listed:

a resin obtained by copolymerizing the above-mentioned terpene compound and phenol-based compound, and
a resin obtained by hydrogenating this resin.

Specifically, a resin obtained by condensing the above-mentioned terpene compound, phenol-based compound and formalin, is included.
As the phenolic compound, phenol, bisphenol A, cresol, xylenol and the like can be listed.
As the aromatic-modified terpene resin, the following can be listed:

a resin obtained by modifying a terpene resin with an aromatic compound, and
a resin obtained by hydrogenating this resin.

The aromatic compound is not particularly limited as long as it is a compound having an aromatic ring, and examples thereof include

phenol compounds, e.g. phenol, alkylphenol, alkoxyphenol, unsaturated hydrocarbon group-containing phenol and the like;
naphthol compounds, e.g. naphthol, alkylnaphthol, alkoxynaphthol, unsaturated hydrocarbon group-containing naphthol and the like;
styrene derivatives, e.g. styrene, alkylstyrene, alkoxystyrene, unsaturated hydrocarbon group-containing styrene and the like;
coumarone, indene and the like.

The acrylic resin is not particularly limited, and for example, a solvent-free acrylic resin can be used.
The solvent-free acrylic resin includes (meth)acrylic resins (polymers)

which is synthesized,
without using, as much as possible, polymerization initiator, chain transfer agent, organic solvent, and the like, which are secondary raw materials,
by high-temperature continuous polymerization method (high-temperature continuous mass polymerization method) (The methods are described in Specification of U.S. Patent No. 4,414,370,
Japanese Patent Application Publication No. 59-6207,
Japanese Patent Publication No. 5-58005,
Japanese Patent Application Publication No. H1-313522,
Specification of U.S. Patent No. 5,010,166,

Toa Synthesis Research Annual Report TREND2000 No. 3, p42-45 and the like).
In the present invention, (meth)acrylic means methacrylic and acrylic.
As the monomer component constituting the acrylic resin, for example, the following can be listed:

(meth)acrylic acid,
(meth)acrylic acid ester (alkyl ester, aryl ester, aralkyl ester, and the like),
(meth)acrylamide, and
(meth)acrylic acid derivatives such as (meth)acrylamide derivative.

Further, as the monomer component constituting the acrylic resin,

aromatic vinyl, e.g. styrene, α-methylstyrene, vinyltoluene, vinylnaphthalene, divinylbenzene, trivinylbenzene, divinylnaphthalene and the like
may be used together with (meth)acrylic acid or (meth)acrylic acid derivative.

The acrylic resin may be a resin composed of only a (meth)acrylic component, and also may be a resin having a component other than the (meth)acrylic component as its constituent element.
Further, the acrylic resin may have a hydroxyl group, a carboxyl group, a silanol group, or the like.
The content of the solid polymer (total content of the solid coumarone indene resin and the like) is, for example, not less than 1.0 part by mass and not more than 100.0 parts by mass with respect to 100 parts by mass of the rubber component.
As the polymer components such as liquid polymers and solid polymers, it is possible to use products of, for example, Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd. , Nitto Chemical Co., Ltd., Nippon Catalyst Co., Ltd., JX Energy Co., Ltd., Arakawa Chemical Industry Co., Ltd., Taoka Chemical Industry Co., Ltd., and the like.
The elastomeric compound 2A of the tread portion 2 may comprise oil.
The oil content is, for example, not less than 1.0 part by mass and not more than 100.0 parts by mass.
The oil content also includes the amount of oil contained in the rubber (oil spread rubber).
As the oil, process oil, vegetable oil and mixture thereof can be listed.
As the process oil, for example, paraffin-based process oil, aroma-based process oil, naphthenic process oil, and the like can be used.
As the vegetable oil, the following can be listed:
castor oil, cottonseed oil, sesame oil, rapeseed oil, soybean oil, palm oil, coconut oil, peanut oil, rosin, pine oil, pine tar, corn oil, rice oil, safflower oil, sesame oil, olive oil, sunflower oil, palm kernel oil, camellia oil, jojoba oil, macadamia nut oil, wood oil and the like.
These may be used alone or in combination of two or more types.
As the oil, it is possible to use products of, for example, Idemitsu Kosan Co., Ltd., Sankyo Yuka Kogyo Co., Ltd., Japan Energy Co., Ltd., Orisoi Co., Ltd., H & R Co., Ltd., Toyokuni Oil Co., Ltd., Showa Shell Sekiyu Co., Ltd., Fuji Kosan Co., Ltd., and the like.
The elastomeric compound 2A of the tread portion 2 may comprise a low-temperature plasticizer.
As the low-temperature plasticizer, the following can be listed:
liquid components such as dioctyl phthalate (DOP), dibutyl phthalate (DBP), tris(2 ethylhexyl)phosphate (TOP), and bis(2 ethylhexyl)sebacate (DOS).
If the low-temperature plasticizer is added, the content is, for example, not less than 1 part by mass and not more than 60 parts by mass with respect to 100 parts by mass of the rubber component.
It is preferable that the elastomeric compound 2A of the tread portion 2 comprises wax. The content of the wax is, for example, 0.5 to 20 parts by mass with respect to 100 parts by mass of the rubber component.
The wax is not particularly limited, and the following can be listed:

petroleum wax, e.g. paraffin wax, microcrystalline wax and the like;
natural wax, e.g. plant wax, animal wax and the like;
synthetic wax, e.g. polymers of ethylene, propylene and the like.

These may be used alone or in combination of two or more types.
As the wax, it is possible to use products of, for example, Ouchi Shinko Chemical Industrial Co., Ltd., Nippon Seiro Co., Ltd., Seiko Kagaku Co., Ltd. and the like.

It is preferable that the elastomeric compound 2A of the tread portion 2 comprises an antiaging agent.
The content of the antiaging agent is, for example, not less than 1-10 parts by mass with respect to 100 parts by mass of the rubber component.
As the antiaging agent, the following can be listed:

naphthylamine-based antiaging agents, e.g.
phenyl-o-naphthylamine
and the like;
diphenylamine-based antiaging agents, e.g.
octylated diphenylamine,
4,4'-bis(α, α'-dimethylbenzyl)diphenylamine
and the like;
p-phenylenediamine-based antiaging agents, e.g.
N-isopropyl-N'-phenyl-p-phenylenediamine,
N-(1,3-dimethylbutyl)-N'-phenyl-p-phenylenediamine,
N,N'-di-2-naphthyl-p-phenylenediamine
and the like;
quinoline-based antiaging agents, e.g.
polymer of 2,2,4-trimethyl-1,2-dihydroquinolin
and the like;
monophenol-based antiaging agents, e.g.
2,6-di-t-butyl-4-methylphenol,
styrenated phenol
and the like;
bis,tris,polyphenol-based antiaging agents, e.g.
tetrakis-[methylene-3-(3', 5'-di-t-butyl-4'-hydroxyphenyl)propionate]methane
and the like.

These may be used alone or in combination of two or more types.
As the antiaging agent, it is possible to use products of, for example, Seiko Chemical Co., Ltd., Sumitomo Chemical Co., Ltd., Ouchi Shinko Chemical Industry Co., Ltd., Flexis Co., Ltd. and the like.
The elastomeric compound 2A of the tread portion 2 may comprise stearic acid. The content of the stearic acid is, for example, 0.5 to 10.0 parts by mass with respect to 100 parts by mass of the rubber component.
As the stearic acid, conventionally known ones may be used, and
products of, for example, NOF Corporation, NOF Corporation, Kao Corporation, FUJIFILM Wako Pure Chemical Corporation, Chiba Fatty Acid Co., Ltd. and the like can be used.
The elastomeric compound 2A of the tread portion 2 may comprise zinc oxide. The content of the zinc oxide is, for example, 0.5 to 10 parts by mass with respect to 100 parts by mass of the rubber component.
As the zinc oxide, conventionally known products can be used, and it is possible to use products of, for example, Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., and the like.
It is preferable that the elastomeric compound 2A of the tread portion 2 comprises a cross-linking agent, e.g. sulfur and the like.
The content of the cross-linking agent is, for example, 0.1 to 10.0 parts by mass with respect to 100 parts by mass of the rubber component.
As the sulfur, the following can be listed:
powdered sulfur, precipitated sulfur, colloidal sulfur, insoluble sulfur, highly dispersible sulfur, soluble sulfur and the like, which are commonly used in the rubber industry.
These may be used alone or in combination of two or more types.
As the sulfur, it is possible to use products of, for example, Tsurumi Chemical Industry Co., Ltd., Karuizawa Sulfur Co., Ltd., Shikoku Chemicals Corporation, Flexis Co., Ltd., Nippon Kanryo Kogyo Co., Ltd., Hosoi Chemical Industry Co., Ltd. and the like.
As the cross-linking agent other than sulfur, the following can be listed: vulcanizing agents containing sulfur atoms such as

TACKIROL V200 manufactured by Taoka Chemical Co., Ltd.,
DURALINK HTS (1,6-hexamethylene-sodium dithiosulfate dihydrate) manufactured by Flexis,
KA9188 (1,6-bis (N, N'-dibenzylthiocarbamoyldithio) hexane) manufactured by LANXESS,

and the like,
organic peroxide such as dicumyl peroxide,
and the like.

It is preferable that the elastomeric compound 2A of the tread portion 2 comprises a vulcanization accelerator.
The content of the vulcanization accelerator is, for example, 0.3 to 10.0 parts by mass with respect to 100 parts by mass of the rubber component.
As the vulcanization accelerator, the following can be listed:

thiazole-based vulcanization accelerators, e.g.
2-mercaptobenzothiazole,
di-2-benzothiazolyldisulfide,
N-cyclohexyl-2-benzothiadylsulfenamide
and the like;
thiram-based vulcanization accelerators, e.g.
tetramethylthiumam disulfide (TMTD),
tetrabenzylthium disulfide (TBzTD),
tetrakis(2-ethylhexyl)thiuram disulfide (TOT-N)
and the like;
sulfenamide-based vulcanization accelerators, e.g.
N-cyclohexyl-2-benzothiazolesulfenamide
N-t-Butyl-2-benzothiazolylsulfenamide,
N-oxyethylene-2-benzothiazolesulfenamide,
N-oxyethylene-2-benzothiazolesulfenamide,
N,N'-diisopropyl-2-benzothiazolesulfenamide
and the like;
guanidine-based vulcanization accelerators, e.g.
diphenylguanidine,
dioltotrilguanidine,
orthotrirubiguanidine
and the like.

These may be used alone or in combination of two or more types.
The elastomeric compound 2A of the tread portion 2 may comprise, in addition to the above components, additives commonly used in the tire industry, such as organic peroxides;

fillers, e.g. calcium carbonate, talc, alumina, clay, aluminum hydroxide, mica and the like;
and the like.

The content of these additives is, for example, 0.1 to 200 parts by mass with respect to 100 parts by mass of the rubber component.
The elastomeric compound 2A of the tread portion 2 is produced by a general method, for example, a manufacturing method which comprises

a base kneading step of kneading a rubber component and a filler such as carbon black or silica, and
a finish kneading step of kneading the kneaded product obtained in the base kneading step with a cross-linking agent.

The kneading can be performed using a known (sealed) kneading machine such as a Banbury mixer, a kneader, an open roll and the like.
The kneading temperature in the base kneading step is, for example, 50 to 200 degrees C, and the kneading time is, for example, 30 seconds to 30 minutes.
In the base kneading step, in addition to the above components, compounding agents conventionally used in the rubber industry, such as softeners such as oil, stearic acid, zinc oxide, antiaging agent, wax, vulcanization accelerator, and the like, may be added and kneaded as appropriate if necessary.
In the finish kneading step, the kneaded product obtained in the base kneading step and cross-linking agent are kneaded.
The kneading temperature in the finish kneading step is, for example, from room temperature to 80 degrees C, and the kneading time is, for example, 1 to 15 minutes.

In the finish kneading step, in addition to the above components, a vulcanization accelerator, zinc oxide and the like may be appropriately added and kneaded as needed.

The pneumatic tire of the present invention is manufactured by a usual method using an unvulcanized rubber compound obtained through the finish kneading step.

That is, the unvulcanized rubber compound is extruded according to the shape of each tire member of the tread, and is shaped on a tire shaping machine, together with other tire members, by a normal method, to build an unvulcanized tire.

By heating and pressurizing this unvulcanized tire in a vulcanizer, a tire is obtained. The vulcanization step can be carried out by applying a known vulcanization means.

The vulcanization temperature is, for example, 120 to 200 degrees C, and
the vulcanization time is, for example, 5 to 15 minutes.

The elastomeric compound 2A of the tread portion 2 can be used for winter tires such as passenger car tires; truck/bus tires; motorcycle tires; high performance tires; studless tires and the like. These tires may be

a run flat tire having a side reinforcing layer;
a tire provided, in the tire cavity, with a sound absorbing member such as sponge; a tire with a sealing member provided, inside the tire or in the tire cavity, with a sealant capable of sealing at the time of puncture;
a tire provided, inside the tire or in the tire cavity, with an electronic component such as a sensor, a wireless tag and the like; and the like.

While the tire as an embodiment of the present invention has been described in detail above, the present invention is not limited to the specific embodiment described above, and may be embodied by modifying into various modes.

## Working Examples

The present invention will be specifically described based on working examples, but the present invention is not limited thereto.

As elastomeric compounds for the tread portion, materials 1 to 8 containing the following compounding ingredients were produced.

Various chemicals contained in the materials 1 to 8 are described hereunder.

SBR1: NS522 manufactured by Zeon Corporation
SBR2: In-house synthesized polymer A (see the manufacturing method below)
BR: Ubepol BR150B manufactured by UBE Industries, Ltd.
carbon black: Diablack N220 manufactured by Mitsubishi Chemical Corporation
silica 1: 9100GR manufactured by Evonic Degussa Co., Ltd.
silica 2: Ultrasil VN3-G manufactured by Evonic Degussa Co., Ltd.
silane coupling agent 1: Si266 manufactured by Evonic Degussa Co., Ltd.
silane coupling agent 2: NXT manufactured by Momentive Inc.
oil: X-140 manufactured by Kyodo Sekiyu KK
resin: SYLVATRAXX 4401 manufactured by Arizona Chemical
antiaging agent: Antigen 3C manufactured by Sumitomo Chemical Co., Ltd.
stearic acid: Stearic acid "Tsubaki" manufactured by Nichiyu Co., Ltd.
zinc oxide: Zinchua No. 1 manufactured by Mitsui Mining & Smelting Co., Ltd.
wax: Sunknock N manufactured by Ouchi Shinko Chemical Industrial Co., Ltd.
sulfur: Powdered sulfur manufactured by Tsurumi Chemical Industry Co., Ltd.
vulcanization accelerator 1: Soxinol CZ manufactured by Sumitomo Chemical Co., Ltd.
vulcanization accelerator 2: Soxinol D manufactured by Sumitomo Chemical Co., Ltd.

< Manufacturing method of the in-house polymer A >

The inside of the polymerization reactor made of stainless steel with an internal volume of 20 liters was washed, dried, and replaced with dry nitrogen. Then, the followings were put in the polymerization reactor:

10.2 kg of hexane (specific gravity 0.68 g/cm$^3$),
547 g of 1,3-butadiene,
173 g of styrene,

6.1 ml of tetrahydrofuran,
5.0 ml of ethylene glycol diethyl ether.

Next, 13.1mmol of n-butyllithium was added as an n-hexane solution to initiate polymerization.

By setting the stirring speed to 130 rpm, and the temperature inside the polymerization reactor to 65 degrees C, the copolymerization of 1,3-butadiene and styrene was carried out for 3 hours, while continuously supplying the monomers into the polymerization reactor.

In the total polymerization, the supply amount of 1,3-butadiene was 821 g, and the supply amount of styrene was 259 g.

Next, the obtained polymer solution was stirred at a stirring speed of 130 rpm, 11.1mmol of 3-diethylaminopropyltriethoxysilane was added, and the mixture was stirred for 15 minutes.

To the polymer solution, 20 ml of a hexane solution containing 0.54 ml of methanol was added, and the polymer solution was further stirred for 5 minutes.

To the polymer solution,

1.8 g of 2-tert-butyl-6-(3-tert-butyl-2-hydroxy-5-methylbenzyl)-4-methylphenylacrylate (manufactured by Sumitomo Chemical Co., Ltd., trade name: Sumilyzer GM), and
0.9 g of pentaerythrityltetrakis(3-laurylthiopropionate) (manufactured by Sumitomo Chemical Co., Ltd., trade name: Sumilyzer TP-D),
were added, and then
from the polymer solution, the polymer A was recovered by steam stripping.

< Structural identification >

The structural identification of the copolymer was performed using a JNM-ECA series device manufactured by JEOL Ltd.

From the measurement results, the styrene content and vinyl content in the copolymer were calculated.

< Measurement of Weight-average molecular weight Mw >

The weight-average molecular weight Mw of the copolymer was determined by standard polystyrene conversion, based on the value measured by a gel permeation chromatograph (GPC)

(GPC-8000 series manufactured by Toso Co., Ltd.,
Detector: differential refractometer,
Column: TSKGEL SUPERMALTPORE HZ-M manufactured by Toso Co., Ltd.)

< Chemicals >

tetrahydrofuran: manufactured by Kanto Chemical Co., Ltd
n-hexane: manufactured by Kanto Chemical Co., Ltd
styrene: manufactured by Kanto Chemical Co., Ltd
1,3-butadiene: manufactured by Tokyo Chemical Industry Co., Ltd
3-(N,N-dimethylamino)propyltrimethoxysilane: manufactured by AZmax Co., Ltd.
n-butyllithium: 1.6M n-butyllithium hexane solution manufactured by Kanto Chemical Co., Ltd.
ethylene glycol diethyl ether: manufactured by Tokyo Chemical Industry Co., Ltd.

Characteristics of Polymer A
Styrene: 25
Vinyl: 60
Mw ($x10^5$): 1.6

Various chemicals' compositions and tan$\delta$ of materials 1 to 8 are shown in Table 1.

[Table 1]

| (unit: part by weight) | | | | | | | | |
|---|---|---|---|---|---|---|---|---|
| | material 1 | material 2 | material 3 | material 4 | material 5 | material 6 | material 7 | material 8 |
| SBR1 | 50 | 50 | - | - | - | - | - | - |
| SBR2 | 30 | 30 | 70 | 80 | 70 | 70 | 70 | 70 |
| BR | 20 | 20 | 30 | 20 | 30 | 30 | 30 | 30 |
| carbon black | 5 | 5 | 5 | 5 | 5 | 5 | 5 | 5 |
| silica 1 | - | - | 60 | 60 | 60 | 40 | 20 | - |
| silica 2 | 60 | 60 | - | - | - | 20 | 40 | 60 |
| silane coupling agent 1 | - | - | 6 | 6 | - | - | - | - |
| silane coupling agent 2 | 6 | 6 | - | - | 6 | 5.6 | 5.2 | 4.8 |
| oil | 8 | 8 | 8 | 8 | 8 | 8 | 8 | 8 |
| resin | - | 8 | - | - | - | - | - | - |
| antiaqinq agent | 2 | 2 | 2 | 2 | 2 | 2 | 2 | 2 |
| stearic acid | 2 | 2 | 2 | 2 | 2 | 2 | 2 | 2 |
| zinc oxide | 2 | 2 | 2 | 2 | 2 | 2 | 2 | 2 |
| wax | 1.5 | 1.5 | 1.5 | 1.5 | 1.5 | 1.5 | 1.5 | 1.5 |
| sulfur | 1.5 | 1.5 | 1.5 | 1.5 | 1.5 | 1.5 | 1.5 | 1.5 |
| vulcanization accelerator 1 | 2 | 2 | 2 | 2 | 2 | 2 | 2 | 2 |
| vulcanization accelerator 2 | 2 | 2 | 2 | 2 | 2 | 2 | 2 | 2 |
| -10deq.C tanδ | 0.480 | 0.400 | 0.065 | 0.750 | 0.700 | 0.800 | 0.700 | 0.900 |
| \|40deq.C tanδ -70deq.C tanδ\| | 0.070 | 0.035 | 0.080 | 0.090 | 0.100 | 0.090 | 0.110 | 0.130 |

As shown in Table 1, in the materials 1 to 5, the tanδ satisfied the following expressions (1) and (2).

The materials 6-8 did not satisfy at least one of the following expressions (1) and (2). That is, a tire to which any one of the materials 6 to 8 was applied was regarded as a comparative example.

$$-10 \text{ degree C } \tan\delta \leq 0.75 \ldots (1)$$

$$|40 \text{ degree C } \tan\delta - 70 \text{ degree C } \tan\delta| \leq 0.10 \ldots (2)$$

Pneumatic tires of size 195/65R15 for passenger cars, which had the basic structure of FIGS. 1 and 2, and to which any one of the above materials 1 to 8 was applied as the elastomeric compound of the tread portion, were

experimentally manufactured based on specifications shown in Tables 2 to 5. Each test tire was tested for dry grip, wet grip and ride comfort performance during low-temperature running.

Specifications common to all test tires and test methods are as follows.

Mounting rim: 15x6.0JJ
Tire internal pressure: Front wheel 230 kPa, Rear wheel 230 kPa
Test vehicle: Displacement 1500 cc, Front wheel drive vehicle
Tire mounting position: All wheels

< Dry grip >

When the above test vehicle ran on a dry road surface, the grip performance was evaluated by the driver's senses.

The result is a score based on Comparative Example 1 being 100, and the larger the value, the better the dry grip performance.

< Wet Grip >

When the above test vehicle ran on a wet road surface, the grip performance was evaluated by the driver's senses.

The result is a score based on Comparative Example 1 being 100, and the larger the value, the better the wet grip performance.

< Ride comfort performance during low-temperature running >

When the above test vehicle ran in an environment of not higher than 5 degrees C, the ride comfort performance was evaluated by the driver's senses.

The result is a score based on Comparative Example 1 being 100, and the larger the value, the better the riding comfort during low-temperature running.

The test results are shown in Tables 2-5.

[Table 2]

| | comparative example 1 | comparative example 2 | comparative example 3 | working example 1 | working example 2 | working example 3 | working example 4 | working example 5 | comparative example 4 | comparative example 5 |
|---|---|---|---|---|---|---|---|---|---|---|
| elastomeric composition of tread portion | material 8 | material 1 | material 1 | material 1 | material 2 | material 3 | material 4 | material 5 | material 6 | material 7 |
| -10deg.C tanδ | 0.900 | 0.480 | 0.480 | 0.480 | 0.400 | 0.065 | 0.750 | 0.700 | 0.800 | 0.700 |
| \|40deg.C tanδ-70deg.C tanδ\|\| | 0.130 | 0.070 | 0.070 | 0.070 | 0.035 | 0.080 | 0.090 | 0.100 | 0.090 | 0.110 |
| first main groove's L80/L0 | 0.52 | 0.25 | 0.75 | 0.52 | 0.52 | 0.52 | 0.52 | 0.52 | 0.52 | 0.52 |
| first main groove's depth d2 / tread portion's maximum thickness d1 | 0.48 | 0.25 | 0.65 | 0.48 | 0.48 | 0.48 | 0.48 | 0.48 | 0.48 | 0.48 |
| rubber thickness at second main groove bottom d4 / tread portion's maximum thickness d1 | 0.10 | 0.10 | 0.10 | 0.10 | 0.10 | 0.10 | 0.10 | 0.10 | 0.10 | 0.10 |
| lateral grooves' width/ groove depth | 0.65 | 0.65 | 0.65 | 0.65 | 0.65 | 0.65 | 0.65 | 0.65 | 0.65 | 0.65 |
| second shoulder lateral grooves' depth/distance d6 | 0.85 | 0.85 | 0.85 | 0.85 | 0.85 | 0.85 | 0.85 | 0.85 | 0.85 | 0.85 |
| total volume of sipes / tread rubber volume (%) | 0.60 | 0.60 | 0.60 | 0.60 | 0.60 | 0.60 | 0.60 | 0.60 | 0.60 | 0.60 |
| dry grip (score) | 100 | 102 | 97 | 106 | 106 | 104 | 103 | 102 | 101 | 102 |
| wet grip (score) | 100 | 98 | 101 | 105 | 105 | 103 | 102 | 103 | 101 | 100 |
| ride comfort during low-temperature running (score) | 100 | 97 | 100 | 105 | 103 | 105 | 103 | 102 | 100 | 100 |

[Table 3]

| | comparative example 6 | working example 6 | working example 7 | working example 8 | working example 9 | comparative example 7 | comparative example 8 | working example 10 | working example 11 | working example 12 |
|---|---|---|---|---|---|---|---|---|---|---|
| elastomeric composition of tread portion | material 1 | material 1 | material 1 | material 1 | material 1 | material 1 | material 1 | material 1 | material 1 | material 1 |
| -10deg.C tanδ | 0.480 | 0.480 | 0.480 | 0.480 | 0.480 | 0.480 | 0.480 | 0.480 | 0.480 | 0.480 |
| \|40deg.C tanδ-70deg.C tanδ\| | 0.070 | 0.070 | 0.070 | 0.070 | 0.070 | 0.070 | 0.070 | 0.070 | 0.070 | 0.070 |
| first main groove's L80/L0 | 0.25 | 0.30 | 0.40 | 0.60 | 0.70 | 0.75 | 0.52 | 0.52 | 0.52 | 0.52 |
| first main groove's depth d2/ tread portion's maximum thickness d1 | 0.48 | 0.48 | 0.48 | 0.48 | 0.48 | 0.48 | 0.25 | 0.30 | 0.40 | 0.55 |
| rubber thickness at second main groove bottom d4 / tread portion's maximum thickness d1 | 0.10 | 0.10 | 0.10 | 0.10 | 0.10 | 0.10 | 0.10 | 0.10 | 0.10 | 0.10 |
| lateral grooves' width/groove depth | 0.65 | 0.65 | 0.65 | 0.65 | 0.65 | 0.65 | 0.65 | 0.65 | 0.65 | 0.65 |
| second shoulder lateral grooves' depth/distance d6 | 0.85 | 0.85 | 0.85 | 0.85 | 0.85 | 0.85 | 0.85 | 0.85 | 0.85 | 0.85 |
| total volume of sipes / tread rubber volume (%) | 0.60 | 0.60 | 0.60 | 0.60 | 0.60 | 0.60 | 0.60 | 0.60 | 0.60 | 0.60 |
| dry grip (score) | 105 | 106 | 106 | 105 | 103 | 98 | 107 | 107 | 106 | 106 |
| wet grip (score) | 99 | 103 | 105 | 106 | 106 | 107 | 101 | 103 | 104 | 105 |
| ride comfort during low-temperature running (score) | 99 | 102 | 104 | 105 | 104 | 100 | 98 | 101 | 104 | 105 |

[Table 4]

| | working example 13 | comparative example 9 | working example 14 | working example 15 | working example 16 | working example 17 | working example 18 | working example 19 | working example 20 | working example 21 |
|---|---|---|---|---|---|---|---|---|---|---|
| elastomeric composition of tread portion | material 1 | material 1 | material 1 | material 1 | material 1 | material 1 | material 1 | material 1 | material 1 | material 1 |
| -10deg.C tanδ | 0.480 | 0.480 | 0.480 | 0.480 | 0.480 | 0.480 | 0.480 | 0.480 | 0.480 | 0.480 |
| \|40deg.C tanδ-70deg.C tanδ\| | 0.070 | 0.070 | 0.070 | 0.070 | 0.070 | 0.070 | 0.070 | 0.070 | 0.070 | 0.070 |
| first main groove's L80/L0 | 0.52 | 0.52 | 0.52 | 0.52 | 0.52 | 0.52 | 0.52 | 0.52 | 0.52 | 0.52 |
| first main groove's depth d2/ tread portion's maximum thickness d1 | 0.60 | 0.65 | 0.48 | 0.48 | 0.48 | 0.48 | 0.48 | 0.48 | 0.48 | 0.48 |
| rubber thickness at second main groove bottom d4/tread portion's maximum thickness d1 | 0.10 | 0.10 | 0.05 | 0.15 | 0.20 | 0.25 | 0.10 | 0.10 | 0.10 | 0.10 |
| lateral grooves' width/ groove depth | 0.65 | 0.65 | 0.65 | 0.65 | 0.65 | 0.65 | 0.50 | 0.55 | 0.75 | 0.80 |
| second shoulder lateral grooves' depth/distance d6 | 0.85 | 0.85 | 0.85 | 0.85 | 0.85 | 0.85 | 0.85 | 0.85 | 0.85 | 0.85 |
| total volume of sipes / tread rubber volume (%) | 0.60 | 0.60 | 0.60 | 0.60 | 0.60 | 0.60 | 0.60 | 0.60 | 0.60 | 0.60 |
| dry grip (score) | 103 | 100 | 103 | 106 | 106 | 106 | 103 | 105 | 106 | 106 |
| wet grip (score) | 106 | 106 | 105 | 105 | 104 | 103 | 105 | 105 | 105 | 105 |
| ride comfort during low-temperature running (score) | 104 | 104 | 104 | 105 | 104 | 103 | 106 | 105 | 103 | 101 |

[Table 5]

| | working example 22 | working example 23 | working example 24 | working example 25 | working example 26 | working example 27 | working example 28 | working example 29 |
|---|---|---|---|---|---|---|---|---|
| elastomeric composition of tread portion | material 1 | material 1 | material 1 | material 1 | material 1 | material 1 | material 1 | material 1 |
| -10deg.C tanδ | 0.480 | 0.480 | 0.480 | 0.480 | 0.480 | 0.480 | 0.480 | 0.480 |
| \|40deg.C tanδ-70deg.C tanδ\| | 0.070 | 0.070 | 0.070 | 0.070 | 0.070 | 0.070 | 0.070 | 0.070 |
| first main groove's L80/L0 | 0.52 | 0.52 | 0.52 | 0.52 | 0.52 | 0.52 | 0.52 | 0.52 |
| first main groove's depth d2 / tread portion's maximum thickness d1 | 0.48 | 0.48 | 0.48 | 0.48 | 0.48 | 0.48 | 0.48 | 0.48 |
| rubber thickness at second main groove bottom d4 / tread portion's maximum thickness d1 | 0.10 | 0.10 | 0.10 | 0.10 | 0.10 | 0.10 | 0.10 | 0.10 |
| lateral grooves' width/groove depth | 0.65 | 0.65 | 0.65 | 0.65 | 0.65 | 0.65 | 0.65 | 0.65 |
| second shoulder lateral grooves' depth/ distance d6 | 0.70 | 0.75 | 0.95 | 1.00 | 0.85 | 0.85 | 0.85 | 0.85 |
| total volume of sipes / tread rubber volume (%) | 0.60 | 0.60 | 0.60 | 0.60 | 0.20 | 0.40 | 0.80 | 1.00 |
| dry grip (score) | 106 | 106 | 104 | 102 | 107 | 106 | 104 | 102 |
| wet grip (score) | 103 | 104 | 105 | 105 | 102 | 104 | 106 | 106 |
| ride comfort during low-temperature running (score) | 102 | 104 | 105 | 106 | 101 | 103 | 105 | 106 |

As shown in the above tables, in Comparative Example 1, the material 8 was adopted, and the tanδ did not satisfy the above expressions (1) and (2).

In Comparative Examples 2 and 3, the material 1 was adopted, and the tanδ satisfied the above-mentioned expressions (1) and (2), but the configuration of the first main groove was different from the configuration of the present invention. It can be confirmed that, as compared with Comparative examples 1-3, Working example 1 was improved in dry grip performance, wet grip performance and ride comfort performance during low-pitched-sound running in a well-balanced manner.

Further, it can be confirmed that each performance of Working examples 2 and 3 in which the values of the tanδ were changed from Working example 1 was also excellent.

Further, it can be confirmed that, in Working examples 4 and 5 in which the values of tanδ were close to the upper limit value in the present invention, the ride comfort at low-temperature running was improved while the dry grip performance and the wet grip performance were maintained.

Further, it can be confirmed that, in Working examples 6 to 13 in which the configuration of the first main groove was changed, the above-mentioned effects were also exhibited.

As described above, it was confirmed that each Working example tire was improved in ride comfort performance during low-temperature running while maintaining dry grip performance and wet grip performance.

## Claims

1. A tire (1) whose orientation when mounted on a vehicle is specified and which has a tread portion (2) made of an elastomeric compound (2A),
wherein
with respect to tanδ of the elastomeric compound (2A) measured under a strain condition of a frequency of 10 Hz, 10% initial strain, and 2% dynamic strain,

   -10 degree C tanδ which is the tanδ at -10 degrees C,
   40 degree C tanδ which is the tanδ at 40 degrees C, and
   70 degree C tanδ which is the tanδ at 70 degrees C
   satisfy the following expressions (1) and (2):

$$-10 \text{ degree C } \tan\delta \leq 0.75 \ldots (1)$$

$$|40 \text{ degree C } \tan\delta - 70 \text{ degree C } \tan\delta| \leq 0.10 \ldots (2),$$

   **characterized in that**

   the tread portion (2) comprises a plurality of main grooves (11, 12, 13) extending in a tire circumferential direction,
   the plurality of main grooves (11, 12, 13) includes a first main groove (11) located most outboard when mounted on the vehicle,
   in the first main groove (11), a ratio L80/L0 of a groove width L80 at a depth (d3) of 80% of the maximum depth (d2) to a groove width L0 at the ground contacting face of the tread portion (2) is 0.3 to 0.7,
   a maximum depth (d2) of the first main groove (11) is 0.30 to 0.60 times a maximum thickness of the tread portion (2),
   the plurality of main grooves (11, 12, 13) includes a second main groove (12) located most inboard when mounted on the vehicle, and
   a rubber thickness (d4) at the groove bottom of the second main groove (12) is 0.05 to 0.25 times the maximum thickness (d1) of the tread portion (2).

2. The tire (1) as set forth in claim 1, wherein
the -10 degree C tanδ is not more than 0.60.

3. The tire (1) as set forth in claim 1 or 2, wherein
the -10 degree C tanδ is not more than 0.50.

4. The tire (1) according to any one of claims 1 to 3, wherein

   the tread portion (2) is provided with a plurality of lateral grooves (15) extending in tire axial directions, and
   at least one of the plurality of lateral grooves (15) has a groove width/groove depth ratio of 0.50 to 0.80.

5. The tire (1) according to any one of claims 1 to 4, wherein

the tread portion (2) comprises
a second tread edge (Te2) which is located inboard of the vehicle when mounted on the vehicle, and
a second shoulder land portion (24) which is partitioned as being on the most second tread edge side,

the second shoulder land portion (24) is provided with a plurality of second shoulder lateral grooves (33), and depths of the second shoulder lateral grooves (33) are 0.70 to 1.00 times a distance (d6) in the tire radial direction

from a reference line extending in the tire axial direction through the outer end in the tire radial direction of the tread portion (2)
to the second tread edge (Te2) in a tire meridional cross section.

**6.** The tire (1) according to any one of 1 to 5, wherein

the tread portion (2) is provided with a plurality of sipes (16),
wherein the term "sipe" means an incision having a width of 1.5 mm or less, and the total volume of the plurality of sipes (16) is 0.20% to 1.00% of the volume of a tread rubber between the two tread edges (Te1, Te2), wherein the volume of the tread rubber means the volume of the elastomeric compound (2A) constituting the tread portion (2) between a virtual plane extending in parallel with the tire radial direction to the inner cavity surface through a first tread edge (Te1), and a virtual plane extending in parallel with the tire radial direction to the inner cavity surface through a second tread edge (Te2), excluding the volume of the cords of a carcass (6) and a tread reinforcing layer (7).

**7.** The tire (1) according to any one of claims 1 to 6, which is a tire for a passenger car.

**8.** The tire (1) according to any one of claims 1 to 7, wherein
the elastomeric compound (2A) of the tread portion (2) comprises 70 to 80 parts by weight of styrene-butadiene rubber.

**9.** The tire (1) according to any one of claims 1 to 8, wherein
the elastomeric compound (2A) of the tread portion (2) comprises 20 to 30 parts by weight of butadiene rubber.

**10.** The tire (1) according to any one of claims 1 to 9, wherein
the plurality of main grooves (11, 12, 13) includes a third main groove (13) provided on the tire equator (C).

**11.** The tire (1) according to any one of claims 1 to 10, wherein

the tread portion (2) comprises
a first tread edge (Te1) which is located outboard of the vehicle when mounted on the vehicle, and
a first shoulder land portion (23) including the first tread edge (Te1), and
the first shoulder land (23) portion is provided with a plurality of first shoulder lateral grooves (31) extending from the first tread edge (Te1) and terminated within the first shoulder land portion (23).

**12.** The tire (1) as set forth in claim 11, wherein
the first shoulder land portion (23) is provided with a plurality of first shoulder sipes (32) extending completely across the first shoulder land portion (23) in the tire axial direction.

**13.** The tire (1) according to any one of claims 1 to 12, wherein

the tread portion (2) comprises
a second tread edge (Te2) which is located inboard of the vehicle when mounted on the vehicle, and
a second shoulder land portion (24) including the second tread edge (Te2), and
the second shoulder land portion (24) is provided with a plurality of second shoulder lateral grooves (33) extending completely across the second shoulder land portion (24) in the tire axial direction.

**14.** The tire (1) as set forth in claim 13, wherein
the second shoulder land portion (24) is provided with a plurality of second shoulder sipes (34) whose both ends are terminated within the second shoulder land portion (24).

## Patentansprüche

1. Reifen (1), dessen Orientierung, wenn an einem Fahrzeug montiert, spezifiziert ist, und der einen aus einer Elastomerzusammensetzung (2A) hergestellten Laufstreifenabschnitt (2) aufweist,
wobei
bezüglich tanδ der Elastomerzusammensetzung (2A), gemessen unter einer Dehnungsbedingung einer Frequenz von 10 Hz, 10% anfänglicher Dehnung und 2% dynamischer Dehnung,

 -10 Grad C tanδ, welcher der tanδ bei -10 Grad C ist,
 40 Grad C tanδ, welcher der tanδ bei 40 Grad C ist, und
 70 Grad C tanδ, welcher der tanδ bei 70 Grad C ist,
 den folgenden Ausdrücken (1) und (2) genügen:

$$-10 \text{ Grad C } \tan\delta \leq 0{,}75 \qquad (1)$$

$$|40 \text{ Grad C } \tan\delta - 70 \text{ Grad C } \tan\delta| \leq 0{,}10 \qquad (2),$$

 **dadurch gekennzeichnet, dass**

 der Laufstreifenabschnitt (2) eine Mehrzahl an Hauptrillen (11, 12, 13) umfasst, die sich in einer Reifenumfangsrichtung erstrecken,
 die Mehrzahl an Hauptrillen (11, 12, 13) eine erste Hauptrille (11) enthält, die sich, wenn am Fahrzeug montiert, an weitesten außen liegend befindet,
 in der ersten Hauptrille (11) ein Verhältnis L80/L0 einer Rillenbreite L80 bei einer Tiefe (d3) von 80% der maximalen Tiefe (d2) zu einer Rillenbreite (L0) an der Bodenkontaktfläche des Laufstreifenabschnitts (2) 0,3 bis 0,7 beträgt,
 eine maximale Tiefe (d2) der ersten Hauptrille (11) das 0,30- bis 0,60-fache einer maximalen Dicke des Laufstreifenabschnitts (2) beträgt,
 die Mehrzahl an Hauptrillen (11, 12, 13) eine zweite Hauptrille (12) enthält, die sich, wenn am Fahrzeug montiert, am weitesten innen liegend befindet, und
 eine Kautschukdicke (d4) am Rillenboden der zweiten Hauptrille (12) das 0,05- bis 0,25-fache der maximalen Dicke (d1) des Laufstreifenabschnitts (2) beträgt.

2. Reifen (1) nach Anspruch 1, wobei
der -10 Grad C tanδ nicht mehr als 0,60 beträgt.

3. Reifen (1) nach Anspruch 1 oder 2, wobei
der -10 Grad C nicht mehr als 0,50 beträgt.

4. Reifen (1) nach einem der Ansprüche 1 bis 3, wobei

 der Laufstreifenabschnitt (2) mit einer Mehrzahl an Querrillen (15) versehen ist, die sich in Reifenaxialrichtungen erstrecken, und
 mindestens eine aus der Mehrzahl an Querrillen (15) ein Rillenbreiten/Rillentiefen-Verhältnis von 0,50 bis 0,80 aufweist.

5. Reifen (1) nach einem der Ansprüche 1 bis 4, wobei

 der Laufstreifenabschnitt (2)
 eine zweite Laufstreifenkante (Te2), die sich, wenn am Fahrzeug montiert, innenliegend am Fahrzeug befindet, und
 einen zweiten Schulter-Positivprofil-Abschnitt (24) umfasst, der abgeteilt ist als der am weitesten auf der zweiten Laufstreifenkantenseite befindliche,

 der zweite Schulter-Positivprofil-Abschnitt (24) mit einer Mehrzahl an zweiten Schulter-Querrillen (33) versehen ist, und

Tiefen der zweiten Schulter-Querrillen (33) das 0,70- bis 1,00-fache eines Abstands (d6) in der Reifenradialrichtung

von einer Bezugslinie, die sich in der Reifenaxialrichtung durch das äußere Ende in der Reifenradialrichtung des Laufstreifenabschnitts (2) erstreckt, zu der zweiten Laufstreifenkante (Te2) in einem meridionalen Reifenquerschnitt betragen.

**6.** Reifen (1) nach einem der Ansprüche 1 bis 5, wobei

der Laufstreifenabschnitt (2) mit einer Mehrzahl an Feineinschnitten (16) versehen ist,
wobei der Begriff "Feineinschnitt" einen Einschnitt bezeichnet, der eine Breite von 1,5 mm oder weniger aufweist, und das Gesamtvolumen der Mehrzahl an Feineinschnitten (16) 0,20% bis 1,00% des Volumens eines Laufstreifenkautschuks zwischen den zwei Laufstreifenkanten (Te1, Te2) beträgt,
wobei das Volumen des Laufstreifenkautschuks das Volumen der Elastomerzusammensetzung (2A), die den Laufstreifenabschnitt (2) bildet, zwischen einer virtuellen Ebene, die sich parallel mit der Reifenradialrichtung zur inneren Hohlraumoberfläche durch eine erste Laufstreifenkante (Te1) erstreckt, und einer virtuellen Ebene, die sich parallel mit der Reifenradialrichtung zur inneren Hohlraumoberfläche durch eine zweite Laufstreifenkante (Te2) erstreckt, bezeichnet, unter Ausschluss des Volumens der Cords einer Karkasse (6) und einer Laufstreifenverstärkungsschicht (7).

**7.** Reifen (1) nach einem der Ansprüche 1 bis 6, welcher ein Reifen für einen Personenkraftwagen ist.

**8.** Reifen (1) nach einem der Ansprüche 1 bis 7, wobei
die Elastomerzusammensetzung (2A) des Laufstreifenabschnitts (2) 70 bis 80 Gewichtsteile Styrol-Butadien-Kautschuk umfasst.

**9.** Reifen (1) nach einem der Ansprüche 1 bis 8, wobei
die Elastomerzusammensetzung (2A) des Laufstreifenabschnitts (2) 20 bis 30 Gewichtsteile Butadien-Kautschuk umfasst.

**10.** Reifen (1) nach einem der Ansprüche 1 bis 9, wobei
die Mehrzahl an Hauptrillen (11, 12, 13) eine dritte Hauptrille (13) enthält, die am Reifenäquator (C) vorgesehen ist.

**11.** Reifen (1) nach einem der Ansprüche 1 bis 10, wobei

der Laufstreifenabschnitt (2)
eine erste Laufstreifenkante (Te1), die sich, wenn am Fahrzeug montiert, außenliegend am Fahrzeug befindet, und
einen ersten Schulter-Positivprofil-Abschnitt (23) umfasst, der die erste Laufstreifenkante (Te1) enthält, und
der erste Schulter-Positivprofil-Abschnitt (23) mit einer Mehrzahl an ersten Schulterquerrillen (31) versehen ist, die sich von der ersten Laufstreifenkante (Te1) aus erstrecken und innerhalb des ersten Schulter-Positivprofil-Abschnitts (23) enden.

**12.** Reifen (1) nach Anspruch 11, wobei
der erste Schulter-Positivprofil-Abschnitt (23) mit einer Mehrzahl an ersten Schulter-Feineinschnitten (32) versehen ist, die sich vollständig über den ersten Schulter-Positivprofil-Abschnitt (23) in der Reifenaxialrichtung erstrecken.

**13.** Reifen (1) nach einem der Ansprüche 1 bis 12, wobei

der Laufstreifenabschnitt (2)
eine zweite Laufstreifenkante (Te2), die sich, wenn am Fahrzeug montiert, innenliegend am Fahrzeug befindet, und
einen zweiten Schulter-Positivprofil-Abschnitt (24) umfasst, der die zweite Laufstreifenkante (Te2) enthält, und
der zweite Schulter-Positivprofil-Abschnitt (24) mit einer Mehrzahl an zweiten Schulterquerrillen (33) versehen ist, die sich vollständig über den zweiten Schulter-Positivprofil-Abschnitt (24) in der Reifenaxialrichtung erstrecken.

**14.** Reifen (1) nach Anspruch 13, wobei

der zweite Schulter-Positivprofil-Abschnitt (24) mit einer Mehrzahl an zweiten Schulter-Feineinschnitten (34) versehen ist, deren beide Enden innerhalb des zweiten Schulter-Positivprofil-Abschnitts (24) enden.

## Revendications

**1.** Pneumatique (1) dont l'orientation lorsqu'il est monté sur un véhicule est spécifiée et qui a une portion de bande de roulement (2) constituée d'un composé élastomère (2A), dans lequel

par rapport à la tanδ du composé élastomère (2A) mesurée sous une condition de contrainte d'une fréquence de 10 Hz, d'une contrainte initiale de 10 %, et d'une contrainte dynamique de 2 %,
-10 degrés C tanδ qui est la tanδ à -10 degrés C,
40 degrés C tanδ qui est la tanδ à 40 degrés C, et
70 degrés C tanδ qui est la tanδ à 70 degrés C
satisfont les expressions (1) et (2) suivantes :

$$-10 \text{ degrés C } \tan\delta \leq 0{,}75 \ldots (1)$$

$$|40 \text{ degrés C } \tan\delta - 70 \text{ degrés C } \tan\delta| \leq 0{,}10 \ldots (2)$$

**caractérisé en ce que**
la portion de roulement (2) comprend une pluralité de sillons principaux (11, 12, 13) s'étendant dans une direction circonférentielle du pneumatique,
la pluralité de sillons principaux (11, 12, 13) comprend un premier sillon principal (11) situé le plus vers l'extérieur lorsqu'il est monté sur le véhicule, dans le premier sillon principal (11), un rapport L80/L0 d'une largeur de sillon L80 à une profondeur (d3) de 80 % de la profondeur maximum (d2) à une largeur de sillon L0 à la face de contact du sol de la portion de bande de roulement (2) est de 0,3 à 0,7,
une profondeur maximum (d2) du premier sillon principal (11) est de 0,30 à 0,60 fois une épaisseur maximum de la portion de bande de roulement (2), la pluralité des sillons principaux (11, 12, 13) comprend un deuxième sillon principal (12) situé le plus vers l'intérieur quand il est monté sur le véhicule, et
une épaisseur de caoutchouc (d4) au niveau de la partie inférieure de sillon du deuxième sillon principal (12) est de 0,05 à 0,25 fois l'épaisseur maximum (d1) de la portion de bande de roulement (2).

**2.** Pneumatique (1) selon la revendication 1, dans lequel
la -10 degrés C tanδ est de pas plus de 0,60.

**3.** Pneumatique (1) selon la revendication 1 ou 2, dans lequel
la -10 degrés C tanδ est de pas plus de 0,50.

**4.** Pneumatique (1) selon l'une quelconque des revendications 1 à 3, dans lequel

la portion de bande de roulement (2) est pourvue d'une pluralité de sillons latéraux (15) s'étendant dans les directions axiales du pneumatique et
au moins un de la pluralité de sillons latéraux (15) a un rapport de largeur de sillon/ profondeur de sillon de 0,50 à 0,80.

**5.** Pneumatique (1) selon l'une quelconque des revendications 1 à 4, dans lequel

la portion de bande de roulement (2) comprend
un second bord de bande de roulement (Te2) qui est situé vers l'intérieur du véhicule lorsqu'il est monté sur le véhicule et
une seconde portion de bord de sillon d'épaulement (24) qui est répartie comme étant sur le plus second côté du bord de la bande de roulement,
la seconde portion de bord de sillon d'épaulement (24) est pourvue d'une pluralité de seconds sillons latéraux d'épaulement (33), et

les profondeurs des seconds sillons latéraux d'épaulement sont 0,70 à 1,00 fois une distance (d6) dans la direction radiale du pneumatique
à partir d'une ligne de référence s'étendant dans la direction axiale du pneumatique par l'extrémité externe dans la direction radiale du pneumatique de la portion de bande de roulement (2)
au second bord de bande de roulement (Te2) dans une section transversale méridionale du pneumatique.

**6.** Pneumatique (1) selon l'une quelconque des revendications 1 à 5, dans lequel

la portion de bande de roulement (2) est pourvue d'une pluralité d'entailles (16),
le terme « entaille » signifiant une incision ayant une largeur de 1,5 mm ou moins et le volume total de la pluralité d'entailles (16) étant de 0,20 % à 1,00 % du volume d'un caoutchouc de bande de roulement entre les deux bords de bande de roulement (Te1, Te2), le volume du caoutchouc de la bande de roulement signifiant le volume du composé élastomère (2A) constituant la portion de bande de roulement (2) entre un plan virtuel s'étendant en parallèle avec la direction radiale du pneumatique à la surface de cavité interne par un premier bord de bande de roulement (Te1) et un plan virtuel s'étendant en parallèle avec la direction radiale du pneumatique à la surface de cavité interne par un second bord de bande de roulement (Te2), excluant le volume des cordes d'une carcasse (6) et d'une couche de renforcement de bande de roulement (7).

**7.** Pneumatique (1) selon l'une quelconque des revendications 1 à 6, qui est un pneumatique pour voiture à passagers.

**8.** Pneumatique (1) selon l'une quelconque des revendications 1 à 7, dans lequel
le composé élastomère (2A) de la portion de bande de roulement (2) comprend 70 à 80 parties en poids de caoutchouc styrène-butadiène.

**9.** Pneumatique (1) selon l'une quelconque des revendications 1 à 7, dans lequel
le composé élastomère (2A) de la portion de bande de roulement (2) comprend 70 à 80 parties en poids de caoutchouc butadiène.

**10.** Pneumatique (1) selon l'une quelconque des revendications 1 à 9, dans lequel
la pluralité de sillons principaux (11, 12, 13) comprend un troisième sillon principal (13) prévu sur l'équateur du pneumatique (C).

**11.** Pneumatique (1) selon l'une quelconque des revendications 1 à 10, dans lequel

la portion de bande de roulement (2) comprend
un premier bord de bande de roulement (Te1) qui est situé vers l'extérieur du véhicule lorsqu'il est monté sur la véhicule et
une première portion de bord de sillon d'épaulement (23) comprenant le premier bord de bande de roulement (Te1) et
une première portion de bande de bord de sillon d'épaulement (23) comprenant le premier bord de bande de roulement (Te1), et
la première portion de bord de sillon d'épaulement (23) est pourvue d'une une pluralité de premiers sillons latéraux d'épaulement (31) s'étendant à partir du premier bord de bande de roulement (Te1) et terminé dans la première portion de bord sillon d'épaulement (23).

**12.** Pneumatique selon la revendication 11, dans lequel
la première portion de bande de sillon d'épaulement (23) est pourvue d'une pluralité de premières entailles d'épaulement (32) s'étendant complètement à travers la première portion de bord de sillon d'épaulement (23) dans la direction axiale du pneumatique.

**13.** Pneumatique (1) selon l'une quelconque des revendications 1 à 12, dans lequel

la portion de bande de roulement (2) comprend
un second bord de bande de roulement (Te2) qui est situé vers l'intérieur du véhicule lorsqu'il est monté sur le véhicule et
une seconde portion de bord de sillon d'épaulement (24) comprenant le second bord de bande de roulement (Te2), et
la seconde portion de bord de sillon d'épaulement (24) est pourvue d'une pluralité de seconds sillons latéraux

d'épaulement (33) s'étendant complètement à travers la seconde portion de bord de sillon d'épaulement (24) dans la direction axiale du pneumatique.

**14.** Pneumatique (1) selon la revendication 13, dans lequel
la seconde portion de bord de sillon d'épaulement (24) est pourvue d'une pluralité de secondes entailles d'épaulement (34) dont les deux extrémités sont terminées avec la seconde portion de bord de sillon d'épaulement (24).

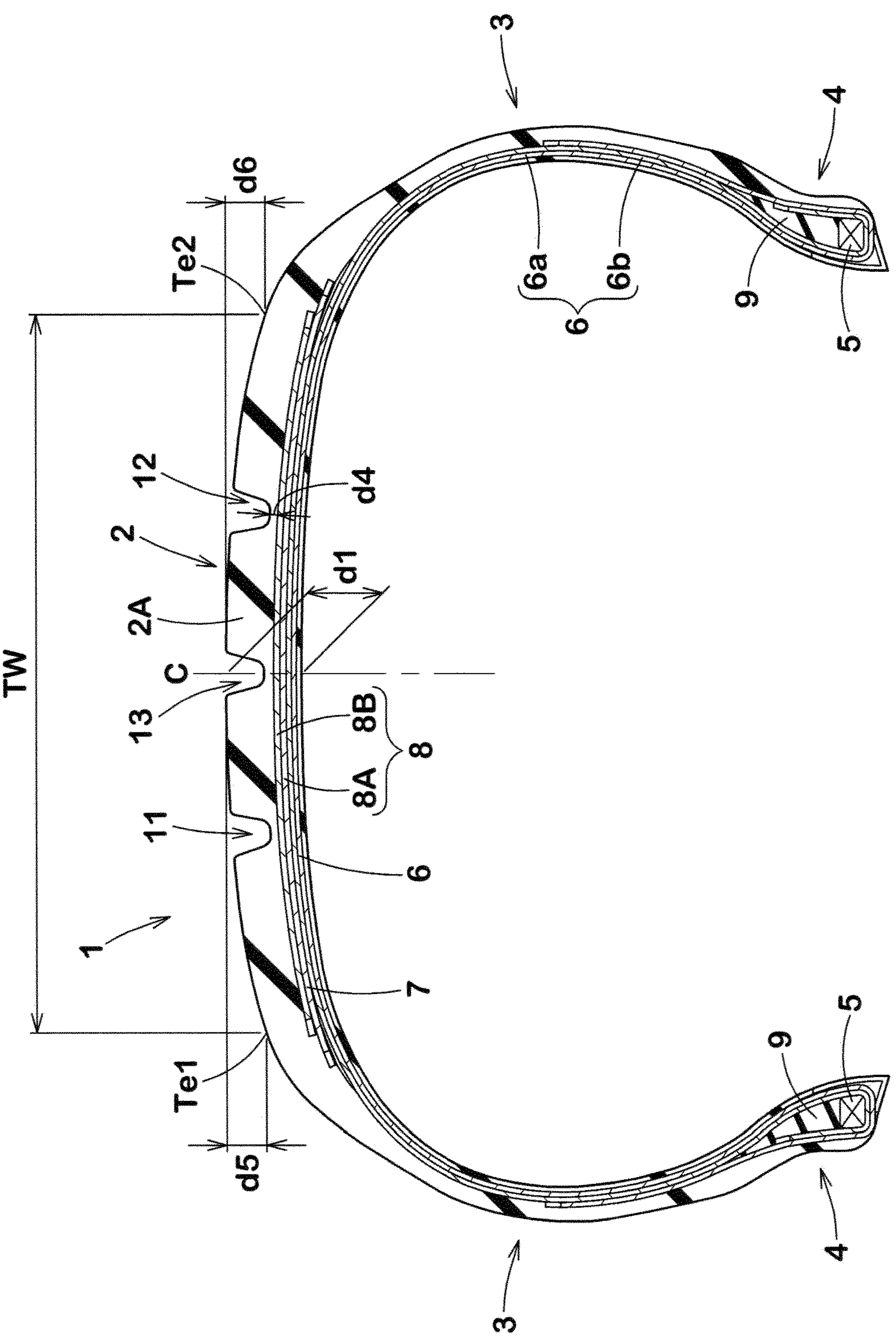


FIG.1

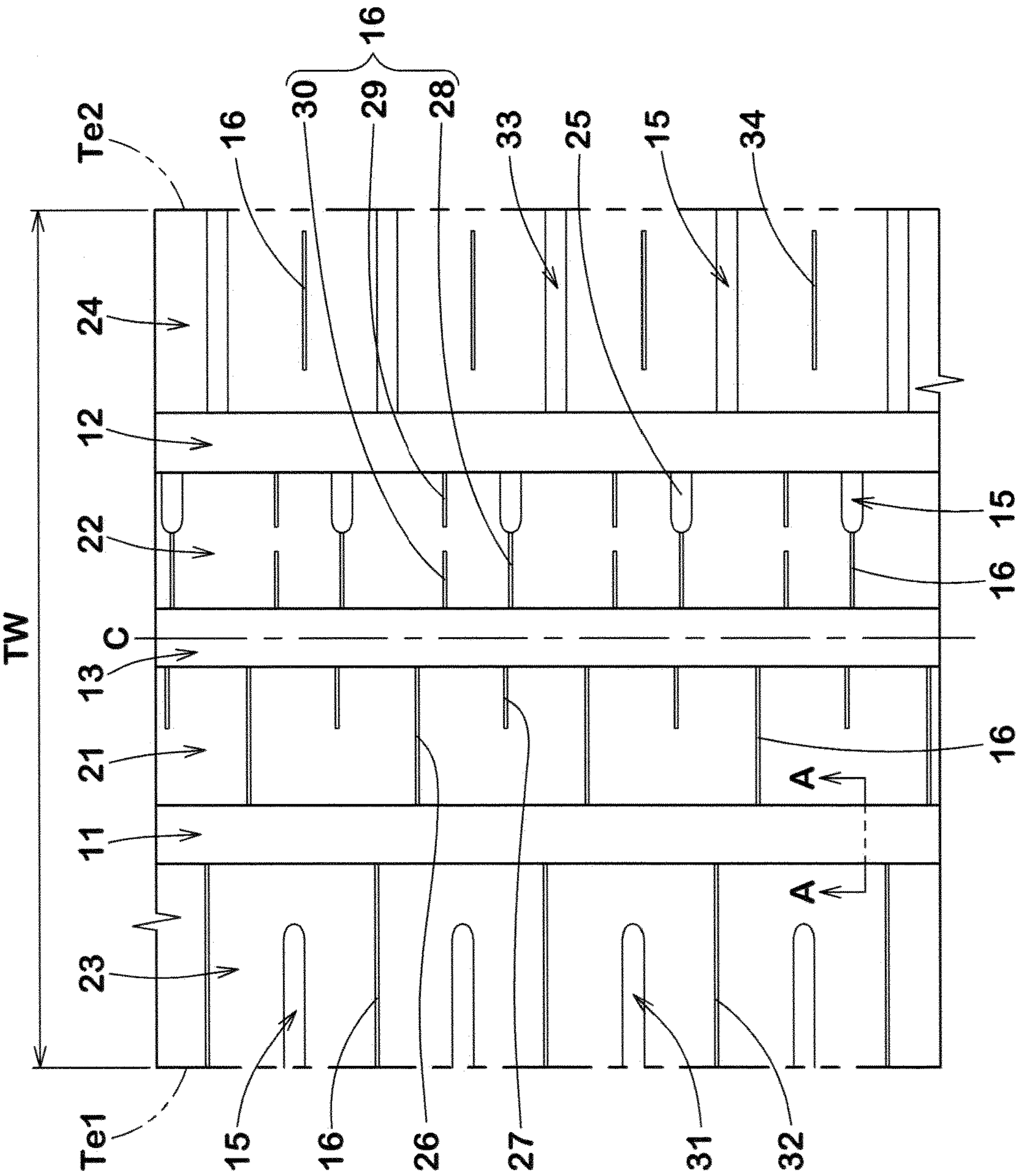
16
30
29
28
Te2
16
33
25
15
34
24
12
22
15
16
TW
C
13
21
16
A
11
A
23
Te1
15
16
26
27
31
32

FIG.2

FIG.3

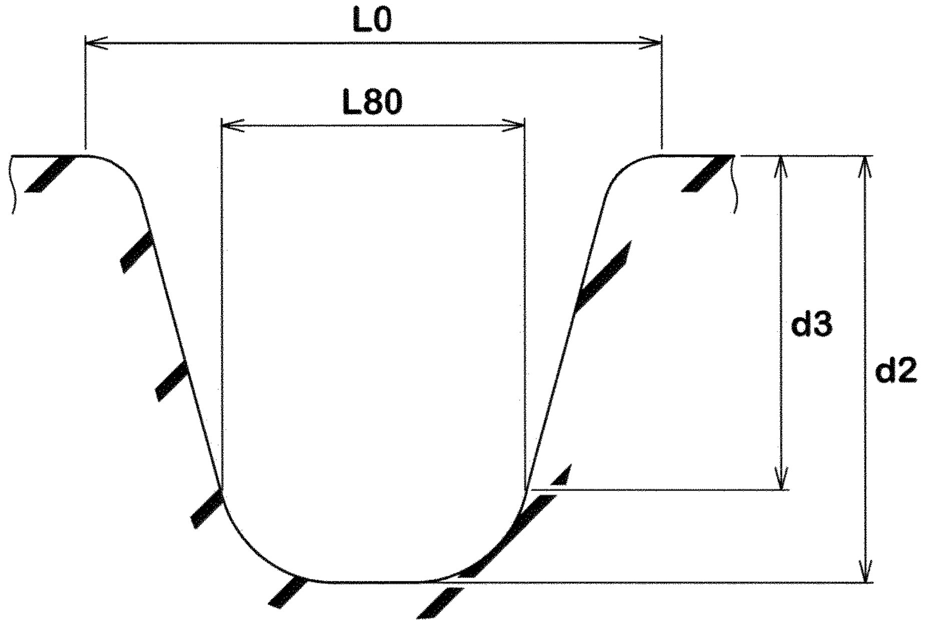

FIG.4

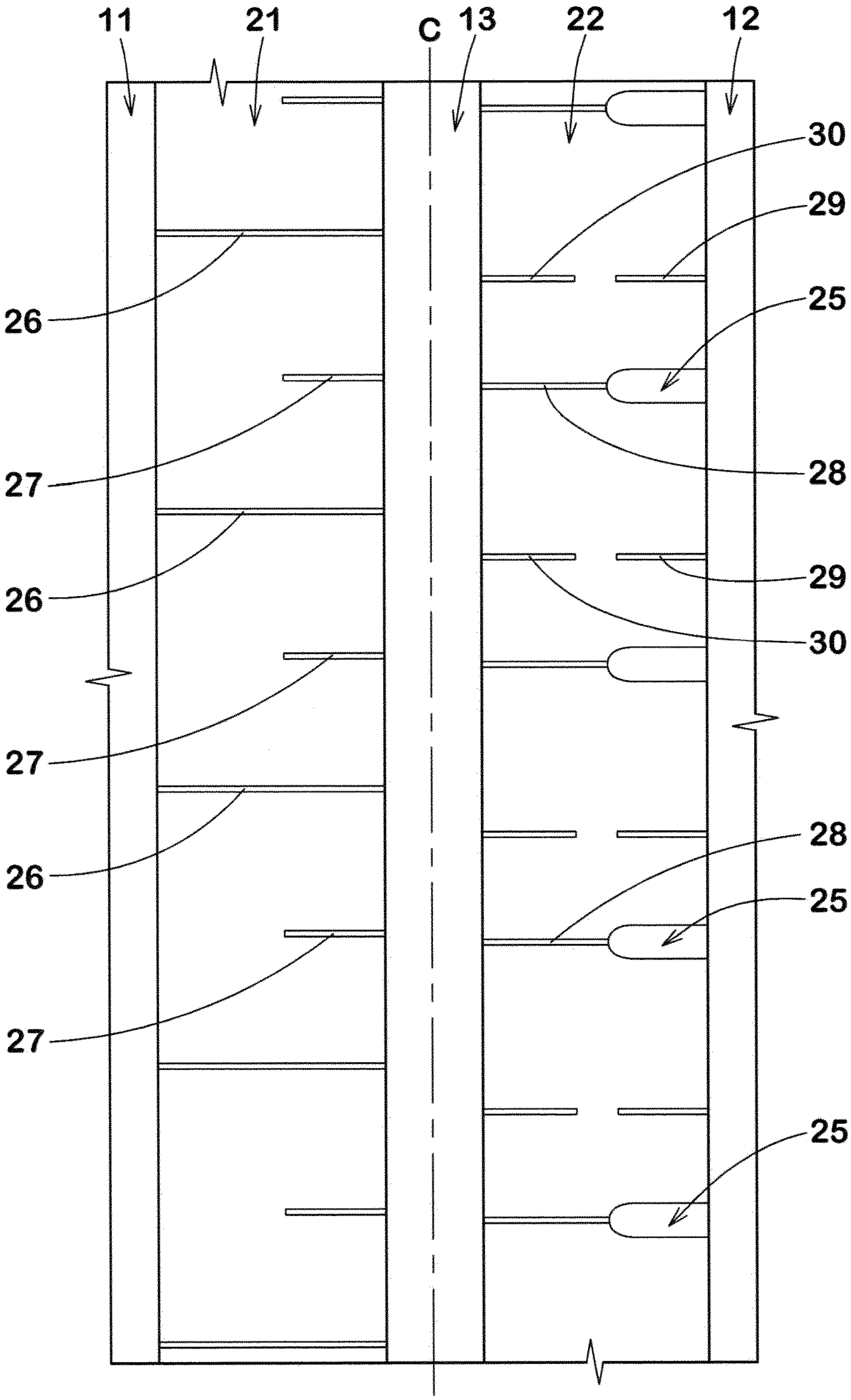

FIG.5

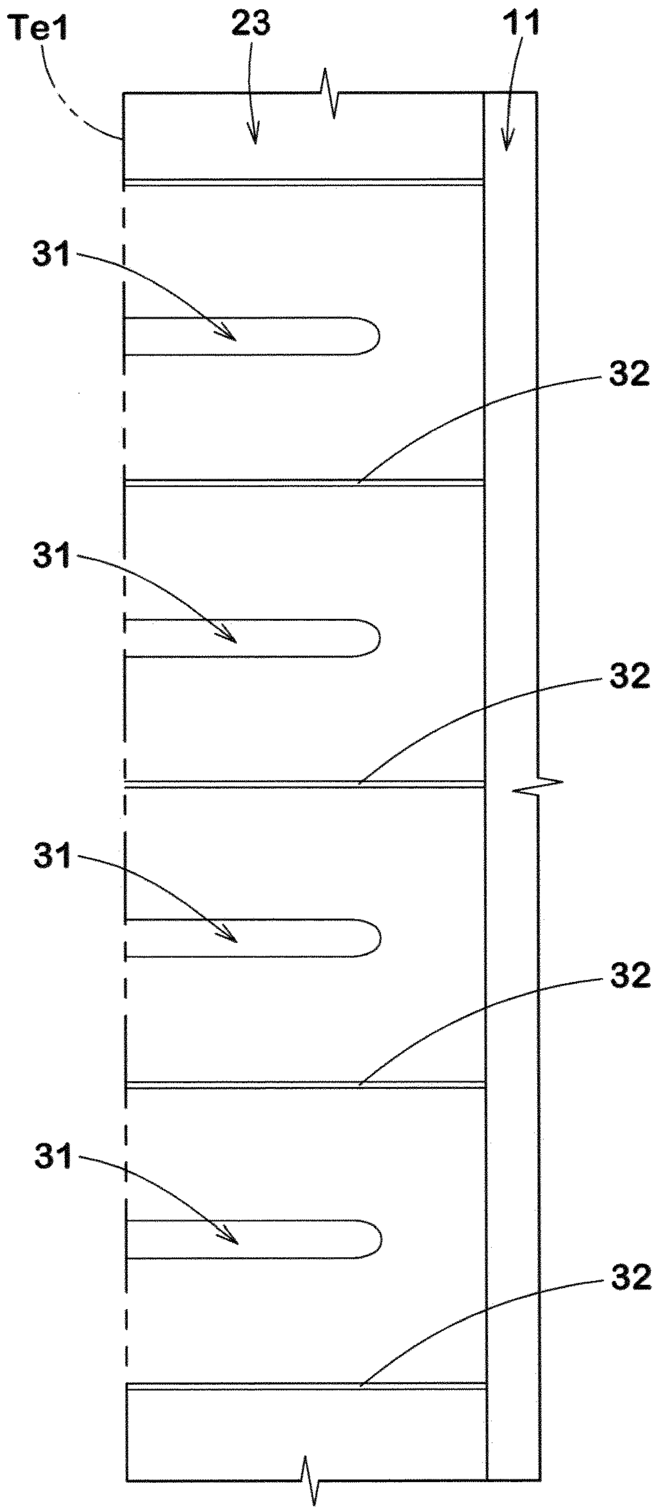

FIG.6

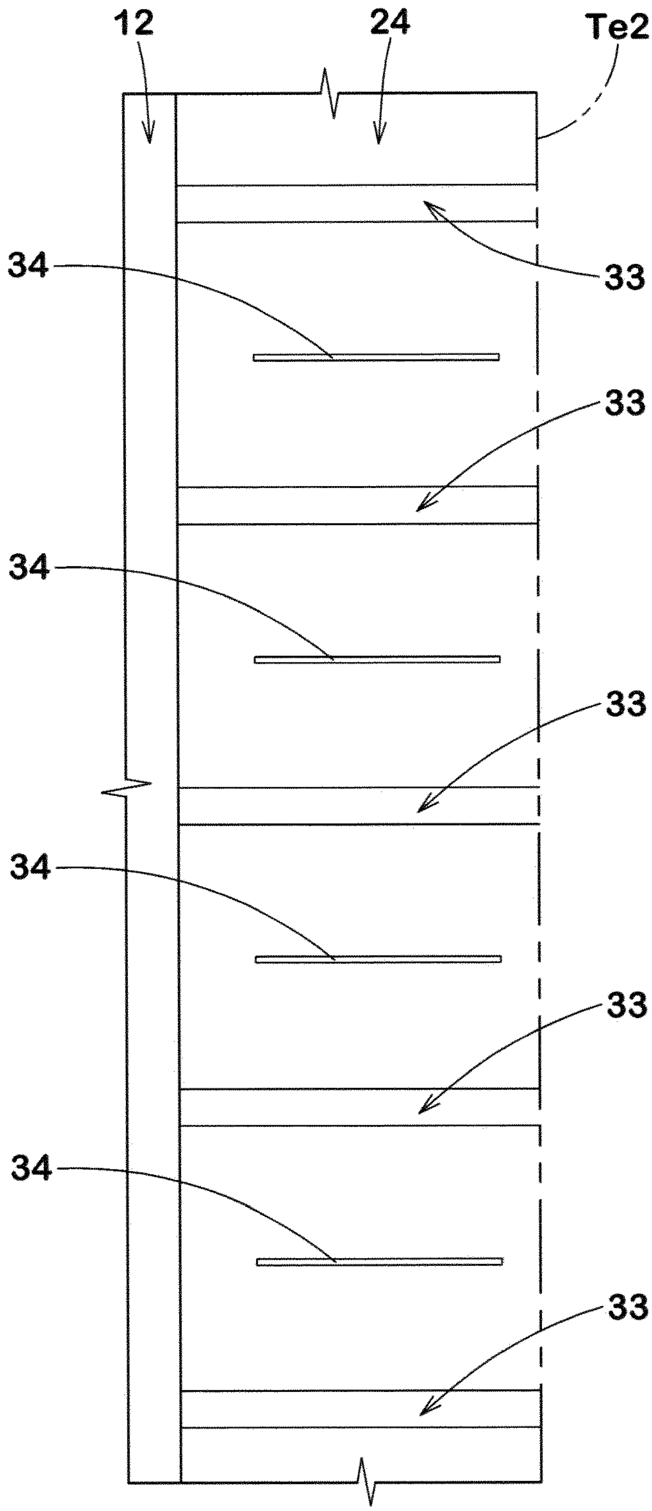

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019094004 A
- EP 2716667 A1
- JP 2010111753 A
- US 4414370 A
- JP 59006207 A
- JP 5058005 A
- JP H1313522 B
- US 5010166 A


### Non-patent literature cited in the description


- *Toa Synthesis Research Annual Report TREND2000,* (3), 42-45